# NEUE EUROPÄISCHE PATENTSCHRIFT

(11) **EP 3 393 745 B2**
(45) Veröffentlichungstag und Bekanntmachung des Hinweises auf die Entscheidung über den Einspruch: **01.04.2026**
(45) Hinweis auf die Patenterteilung: 29.06.2022
(21) Anmeldenummer: 16825427.4
(22) Anmeldetag: 22.12.2016
(51) Int. Cl.: B29C 44/34, B29C 44/54, C04B 35/80, B29C 44/60, B29K 105/04

(54) **VERFAHREN ZUR HERSTELLUNG EINES GESCHÄUMTEN PARTIKELSCHAUMMATERIALS**
METHOD FOR PRODUCING A FOAMED PARTICLE FOAM MATERIAL
PROCÉDÉ POUR PRODUIRE UNE MATIÈRE DE MOUSSE PARTICULAIRE EXPANSÉE

(30) Priorität: 22.12.2015 AT 510952015
(43) Veröffentlichungstag der Anmeldung: 31.10.2018
(73) Patentinhaber: Fill Gesellschaft m.b.H., 4942 Gurten (AT)
(72) Erfinder: LUCHT, Mirjam, 90429 Nürnberg (DE); VETTER, Jörg, 90429 Nürnberg (DE)
(74) Vertreter: Burger, Hannes
(86) Internationale Anmeldenummer: PCT/EP2016/082385
(87) Internationale Veröffentlichungsnummer: WO 2017/109075

(56) Entgegenhaltungen:
- EP-A1- 1 213 051
- EP-A2- 0 348 372
- EP-B1- 0 981 575
- WO-A1-2005/123816
- WO-A1-2015/052265
- WO-A1-96/34039
- CN-Y- 201 042 837
- CN-Y- 201 042 837
- DE-A1- 102004 028 768
- DE-A1- 102013 205 253
- DE-A1- 102013 225 132
- DE-A1- 102014 209 425
- DE-A1- 19 749 019
- DE-A1- 3 243 632
- DE-C1- 10 035 852
- US-A- 3 015 479
- US-A- 3 015 479
- US-A- 3 037 897
- US-A- 3 953 739
- US-A- 4 897 230
- US-A- 5 338 765
- US-A- 5 338 765
- US-A1- 2014 127 436
- "Wikipedia Regelung (Natur und Technik)", WIKIPEDIA, 17 January 2022 (2022-01-17), pages 1 - 2, XP055973557, Retrieved from the Internet <URL:https://de.wikipedia.org/wiki/Regelung_(Natur_und_Technik)> [retrieved on 20221021]
- OTTO FÖLLINGER, REGELUNGSTECHNIK, 1972, pages 13, ISBN: 3-7785-1137-8
- Firmenbroschüre Handle, „Schüttdichtenmess-und -regelgeräte KDW“
- Firmenbroschüre der Kurtz Gruppe aus 10/92,„Kontinuierliche und diskontinuierliche EPS-Vorschäumsystem“
- Firmenbroschüre der Erlenbach GmbH,„EMBead-Vorschäumer für die erfolgreiche Formteil-und Blockproduktion“
- Kurtz Gesagt, 13 DEZ 2004
- DIE 10 GRÖSSTEN IRRTÜMER ÜBER POLYSTYRO, 01 JUL 2012
- Diskontinuierlicher Schäumer, 16 JUL 2004
- Handbook Polymer Foams 20041

## Beschreibung

Die Erfindung betrifft ein Verfahren zur Herstellung eines geschäumten Partikelschaummaterials gemäß Oberbegriff des Anspruch 1, ein Verfahren zur Herstellung eines geschäumten Partikelschaummaterials gemäß Oberbegriff des Anspruch 15 sowie eine Vorrichtung zur Herstellung eines geschäumten Partikelschaummaterials gemäß Oberbegriff des Anspruch 26.
Polymerschäume, insbesondere aus Polystyrol (PS), werden in einem mehrstufigen Verfahren vom Ausgangsprodukt, einem Polystyrol-Granulat bzw. Polystyrol-Perlen, zum fertigen Schaumteil, bspw. Wärmedämmplatten, Wärmedämm-Formteile oder Transportverpackungen, verarbeitet. In einem Vorschäumprozess wird das treibmittelbeladene Granulat unter einer Volumensvergrößerung zu Schaumperlen bzw. dem Schaum-Zwischenprodukt vorgeschäumt, wobei dieses Schaum-Zwischenprodukt ganz wesentlich die mechanischen und thermischen Eigenschaften des Endprodukts bestimmt. Ein Polymerschaum, insbesondere ein Polystyrol-Partikelschaumstoff, ist bei der Wärmedämmung von Altbauten bzw. Neubauten, derzeit der wichtigste Werkstoff. Im Zuge weiterer gesetzlicher Vorgaben wird eine immer bessere Wärmedämmung von Gebäuden gefordert, welche durch eine Erhöhung der Dicke der Wärmedämmschicht erreicht werden kann, oder es wird die Wärmeleitfähigkeit des Dämmmaterials reduziert. Für die praktische Anwendung ebenso von Bedeutung ist die mechanische Festigkeit, wobei bekannt ist, dass eine erhöhte Festigkeit mit einem erhöhten Materialeinsatz des Ausgangsstoffes verbunden ist. Eine größere Menge des Ausgangsstoffes verschlechtert jedoch die Wärmedämmeigenschaften, sodass hier ein Kompromiss gefunden werden muss. Aus der Literatur ist ferner bekannt, dass sich die Wärmeleitfähigkeit durch Vergrößerung des Verhältnisses Zelle / Wandstärke reduzieren lässt. Dadurch wird es ermöglicht, die Wärmeleitfähigkeit quasi entkoppelt von den mechanischen Eigenschaften zu variieren.

Im Folgenden werden die Begriffe Zellstruktur, Zellmorphologie, Zellwände, Zellwachstum, Pore, etc. verwendet. Bei der Herstellung des Ausgangsstoffes, zumeist ein Granulat oder Schnipsel, wird ein Treibmittel im Ausgangsstoff eingelagert. Der Ausgangsstoff weist keine, oder nur eine sehr geringe Zellstruktur auf, im Wesentlichen sind dies kleinsträumige Gaseinschlüsse. Beim Vorschäumprozess wird das mit Treibmittel beladene Polystyrol-Granulat in loser Schüttung in einem diskontinuierlichen Vorschäumer mit Wasserdampf zwischen 100 und 120 °C erhitzt, wobei es auch zu einer Erwärmung des mikroskopisch verteilten Treibmittels und somit eines Druckaufbaus im Inneren des Ausgangsstoffes kommt. Es bilden sich gasgefüllte Zellen (Zellwachstum), welche durch die Zellwände begrenzt sind, wobei die Zellwände offen oder geschlossen sein können. Unter Zellmorphologie bzw. Zellstruktur wird hierin die Größenvariation der Zellen im Schnittbild eines vorgeschäumten Schaum-Zwischenprodukts verstanden. Eine regelmäßige Zellmorphologie bedeutet, dass alle Zellen weitestgehend die gleiche Größe haben, bzw. die Variation der Zellgröße klein ist. Im Zusammenhang mit einem Schaum wird auch von Schaumporen gesprochen, dieser Begriff ist äquivalent zu den Zellen zu verstehen.

Die Forschungen bzw. Untersuchungen, die Basis der gegenständlichen Erfindung sind, haben gezeigt, dass sowohl die Wärmedämmeigenschaft, als auch die mechanische Festigkeit, ganz wesentlich von der inneren Zellstruktur des vorgeschäumten Zwischenprodukts abhängen. In der industriellen Fertigung von Polystyrolschäumen wird zum gegenwärtigen Zeitpunkt zum weitaus überwiegenden Anteil Wasserdampf im Vorschäumprozess verwendet. Ein Wasserdampfprozess hat den Vorteil, dass der Dampf bei der Kondensation eine große Menge Wärmeenergie freigibt. Zum anderen diffundiert er schneller in die Zellen ein als Luft und als das Treibmittel ausdiffundieren kann. Entstehende Druckunterschiede werden dadurch besser ausgeglichen. Demgegenüber stehen allerdings mehrere Nachteile. Einmal ist ein Wasserdampfprozess ein sehr energieintensives Verfahren, bei dem die mikroskopischen Verhältnisse aufgrund der Kondensation des Wasserdampfes nur höchst ungenau festlegbar sind. Ferner muss das vorgeschäumte Zwischenprodukt nach der Entnahme aus der Vorschäumkammer, für eine Dauer von 12 bis 48 Stunden getrocknet werden, um die eingelagerte Feuchtigkeit aus der Zellstruktur zu entfernen. Es ist somit im Wesentlichen kein kontinuierlicher Durchlaufbetrieb möglich, ferner macht dieser Zyklusbetrieb ein großes Lagervolumen erforderlich, um das Zwischenprodukt auf die weitere Verarbeitung vorzubereiten.

Ein wasserdampfbasierter Vorschäumprozess hat jedoch noch einen ganz wesentlichen Nachteil, dass dabei eine sehr ungleichmäßige Zellstruktur entsteht. Durch den kondensierenden Wasserdampf wird mikroskopisch betrachtet, ein sehr inhomogenes Temperaturgefüge entstehen, wodurch es zu einem ungleichmäßigen Aufschäumen des Ausgangsprodukts kommt, was letztendlich in einer sehr inhomogenen Zellstruktur resultiert.

Um den Nachteil eines wasserdampfbasierten Vorschäumprozesses zu eliminieren, ist beispielsweise aus der GB 815 386 eine Vorrichtung für ein strahlungsbasiertes Vorschäumen von körnigem bzw. granularem Material bekannt. Das Dokument offenbart, dass von einer Aufgabevorrichtung körniges Ausgangsmaterial auf ein Förderband aufgebracht wird, und diese aufgebrachte Lage unter einer Abfolge von thermischen Strahlern, insbesondere IR-Strahler, vorbeibewegt wird, wo es durch das Einwirken der IR-Strahlung zu einem Aufschäumen (Vorschäumen) des Granulats kommt. Nachteilig ist jedoch, dass die Temperatureinbringung nur sehr ungleichmäßig erfolgt, sodass das Granulat teilweise bis zum Schmelzpunkt erwärmt wird und die einzelnen Granulatstücke aneinander anhaften. Daher ist dem Förderband nachgelagert eine Separationsvorrichtung angeordnet, welche die aneinander haftenden Granulatstücke wieder trennt. Dabei wird es jedoch zu einer Beschädigung des Granulats kommen, auch können aneinander haftende Granulatbrocken durchrutschen, was für einen nachfolgenden Formschaumprozess von Nachteil ist.

Aus dem Stand der Technik ist ferner bekannt, einen Vorschäumprozess in einem Heißluft-Umluft-Ofen durchzuführen. Ähnlich dem Wasserdampfverfahren ist auch hier die mikroskopische Temperaturverteilung nur äußerst schwer beherrschbar, sodass ebenfalls eine sehr ungleichmäßige Zellmorphologie entstehen wird. Insbesondere ist jedoch der Energieeintrag von Heißluft in das Ausgangsprodukt (Granulat) sehr schlecht, sodass eine vollständige Durchwärmung des Granulats lange dauert, was eben zu einer sehr inhomogenen Zellstruktur führen wird. In den äußeren Randschichten des Granulats kommt es bis zur Erreichung der Durchwärmung zu einer starken Ausgasung des Treibmittels, was für einen nachfolgenden Fertigschaumprozess einen entscheidenden Nachteil darstellt. Es bilden sich eher kleine Zellen mit einer großen Wandstärke.

Die Nachteile bekannter strahlungsbasierter Vorschäumprozesse liegen darin, dass zur Erreichung einer guten Durchwärmung des Ausgangsgranulats, die thermischen Strahler eine hohe Strahlungsleistung bzw. einen großen Energiestrom abgeben, was zu einer sehr ungleichmäßigen Durchwärmung des Granulats und damit zu einer sehr ungleichmäßigen Zellmorphologie des vorgeschäumten Zwischenprodukts führt.

Die DE 10 2013 225 132 A1, die die Oberbegriffen der Ansprüche 1 und 26 offenbart, offenbart ein Verfahren zur Herstellung von vorgeschäumten Poly(meth)acrylimid-Partikeln, die zu Schaumformteilen oder Composites weiterverarbeitet werden können. Das Verfahren zeichnet sich dabei dadurch aus, dass ein Polymergranulat zunächst in einer Vorrichtung mittels IR-Strahlung einer dazu geeigneten Wellenlänge aufgeheizt und damit vorgeschäumt wird. Dieses Granulat kann in nachfolgenden Verfahrensschritten z.B. in einem Presswerkzeug unter Ausschäumen zu einem Formteil oder einem Composite Werkstück mit Schaumkern weiterverarbeitet werden. Diese Druckschrift offenbart Heizparameter wie Wellenlänge und Temperaturen des IR-Strahlers, die auf das jeweilige Schaummaterial abgestellt sind. Zwar wird als Aufgabe in diese Druckschrift genannt, ein P(M)I-Material für das In-Mold-Foaming zur Verfügung zu stellen, das im Endprodukt zu einer gleichmäßigen Dichteverteilung führt. Über die Reproduzierbarkeit der Eigenschaften der vorgeschäumten Partikel selbst enthält diese Druckschrift jedoch keine Lehre.

Die DE 68913235 T2 offenbart ein Verfahren zur Herstellung expandierter thermoplastischer Mikrokugeln durch Erhitzen. Vorgesehen ist dazu ein Förderband zum Transport der Mikrokugeln und eine Vorrichtung zur IR-Beheizung mit oberhalb des Förderbandes angeordneten IR-Lampen.

Die US 3015479 A offenbart ein Verfahren zur teilweisen Expansion thermoplastischen Materials zu geschäumten Partikeln. Das Ausgangsmaterial wird dabei mittels eines Förderbandes unterhalb von IR-Lampen vorbeigefördert.

Die Aufgabe der Erfindung liegt nun darin, ein strahlungsbasiertes Vor-, Weiter- oder Nach-Schäumverfahren zu finden, welches die Nachteile des Standes der Technik überwindet und bei dem auf reproduzierbare Weise eine hohe Partikelqualität erreicht werden kann. Die gewünschte(n) Eigenschaft(en) der vorgeschäumten Partikel soll(en) dabei gezielt erreichbar sein. Insbesondere sollen sich die entstehenden geschäumten Partikel in zumindest einer ihrer Eigenschaften (insb. Dichte, gleichmäßige Zellmorphologie, etc.) im Wesentlichen gleichen, sodass ein im Hinblick auf diese Eigenschaft(en) homogenes Partikelschaum-Granulat erzielt werden kann. Die Aufgabe der Erfindung besteht ferner darin, ein Schaum-Zwischenprodukt zu finden, welches eine verbesserte Wärmedämmfähigkeit aufweist und zumindest eine vergleichbare, bevorzugt jedoch eine höhere mechanische Festigkeit als vergleichbare Schaumzwischenprodukte aufweist.

Die US 5 338 765 beschreibt eine Vorrichtung mit einem Trägerband aus Metall, welches zum Schäumen von Partikel eines Polyimidprepolymers vorgewärmt ist und zur Verschmelzung der Partikel durch einen Ofen mit konvektiver Wärmeübertragung geleitet wird.

Die Aufgabe der Erfindung wird mit einem Verfahren der eingangs genannten Art durch das Kennzeichen des Anspruchs 1 gelöst. Durch die Erfindung kann nun gezielt zumindest eine Eigenschaft des entstehenden geschäumten Partikelschaummaterials durch Regelung von zumindest einem Bestrahlungsparameter eingestellt werden. Dabei wird ausgenutzt, dass die Wahl der Bestrahlungsparameter einen nachvollziehbaren Einfluß auf die entstehenden Partikeln aufweist. Die gewünschten Eigenschaften der geschäumten Partikel können in einer Steuereinrichtung mit entsprechenden Bestrahlungsparametern verknüpft sein. Durch Vorgabe einer gewünschten Eigenschaft, z.B. über eine Eingabeeinrichtung (Tastatur, Mouse, etc.) kann automatisch ein oder mehrere Bestrahlungsparameter aktiviert bzw. eingestellt werden. In diesem Fall muss nur mehr die gewünschte Eigenschaft (Größe, Dichte, Zellstruktur, Oberflächenbeschaffenheit, etc.) eingegeben werden; die Bestrahlungsparameter werden anschließend automatisch eingestellt.

Durch die Sensoreinrichtung können Partikeleigenschaften (fortlaufend) überwacht werden.

Die Erfindung wird nachstehend anhand eines Vorschäumprozesses beschrieben, jedoch kann diese ebenso zum Weiter- bzw. Nachschäumen angewandt werden (wenn z.B. zumindest ein Vorschäumprozess bereits stattgefunden hat). Das dem Prozess (d.h. der IR-Bestrahlung) zugeführte Granulat kann aus ungeschäumten Granulatpartikeln oder aus (teilweise) geschäumten Granulatpartikeln, auch Schaumperlen genannt, gebildet sein. Letztere werden durch das erfindungsgemäße Verfahren weiter- bzw. nachgeschäumt.

Unter dem Begriff "expansionsfähiges Partikelschaummaterial" wird in vorliegender Anmeldung das Ausgangsprodukt (bzw. das dem Verfahren zugeführte Produkt) verstanden. Unter dem Begriff "vorgeschäumtes Partikelschaummaterial" wird das durch das Verfahren hergestellte Schaum-Zwischenprodukt oder Endprodukt verstanden, das zur weiteren Verarbeitung z.B. in Formschäumprozessen verwendet werden kann. Sowohl das Ausgangsprodukt als auch das Schaum-Zwischenprodukt liegen in Form eines Granulats, z.B. Partikeln, Kügelchen, Perlen, etc., vor.

Nur der Vollständigkeit halber sei erwähnt, dass der Ausdruck "relativ bewegen" eine Bewegung des thermischen Strahlers relativ zu stationärem Partikelschaummaterial nicht ausschließt.

Die Erfindung des Anspruch 1 zeichnet sich dadurch aus, dass die Regelung von zumindest einem Bestrahlungsparameter in Abhängigkeit von Sensordaten der zumindest einen Sensoreinrichtung und/oder von zumindest einem aus den Sensordaten abgeleiteten Parameter erfolgt. Dabei kann bei Abweichungen von einer vorgegebenen (Soll-)Eigenschaft der Schaumpartikel (z.B. Größe, Dichte, etc.) über eine Regelungsschleife direkt auf den (Vor-)Schäumprozess Einfluss genommen werden. Beispielsweise kann bei zu kleiner Größe oder zu hoher Dichte der entstehenden Schaumpartikel die Bestrahlungsdauer und/oder -intensität erhöht werden. Zur Veränderung der inneren (Zell)Struktur kann z.B. das Spektrum des IR-Strahlers verändert werden. Durch entsprechende Anpassungen kann das Verhältnis zwischen Volumenabsorption und Oberflächenabsorption an den jeweiligen Granulatteilchen verändert werden. Dadurch kann gezielt eingestellt werden, in welchem Ausmaß Energie in das Partikelmaterial als solches oder das darin enthaltene Treibmittel eingebracht wird. Mit der Regelung kann auch eine Anpassung an unterschiedliche Ausgangschargen vorgenommen werden, sodass das vorgeschäumte Zwischen- bzw. Endprodukt immer dieselbe Qualität aufweist.

Durch diese Ausführungsform können reproduzierbare und gleichmäßige Partikelchargen bzw. Granulate aus (vor)geschäumtem Partikelschaummaterial hergestellt werden.

Eine Erfassung während der Bestrahlung erlaubt es, den Schäumprozess direkt zu verfolgen und evtl. Fehler zu erkennen. Eine Erfassung vor der Bestrahlung erlaubt es, das Ausgangsprodukt zu charakterisieren: solche Informationen können erforderlich sein, um z.B. das Zwischen-Schaumprodukt über die Bestrahlungsparameter zu definieren. Z.B. kann bei Kenntnis der Größe der Ausgangspartikel der erforderliche Volumenzuwachs ermittelt und über die Bestrahlungsparameter eingestellt werden.

Eine bevorzugte Ausführungsform zeichnet sich dadurch aus, dass aus den Sensordaten zumindest eine Eigenschaft des erfassten Partikelschaummaterials vorzugsweise die Partikelgröße, das Partikelgewicht, die Dichte, insbesondere die Schüttdichte, die innere Struktur und/oder die Oberflächenbeschaffenheit, ermittelt wird. Dadurch wird eine konkrete Information über das entstehende Granulat erhalten, wodurch Rückschlüsse auf den Schäumvorgang erhalten und entsprechende Korrekturen der Bestrahlungsparameter vorgenommen werden können.

Eine bevorzugte Ausführungsform zeichnet sich dadurch aus, dass zur Regelung des zumindest einen Bestrahlungsparameters zumindest eine Eigenschaft des noch nicht bestrahlten Partikelschaummaterials mit den Sensordaten oder mit zumindest einer, aus den Sensordaten ermittelten Eigenschaft des bestrahlten Partikelschaummaterials in Beziehung gesetzt wird. Dadurch kann die Vorher-Situation mit der Nachher-Situation verglichen werden und - falls erforderlich - entsprechende Anpassungen der Bestrahlungsparameter durchgeführt werden. Die betreffende Eigenschaft des noch nicht bestrahlten Partikelschaummaterials kann entweder über eine Eingabeeinrichtung eingegeben werden oder ebenfalls mittels einer Sensoreinrichtung bestimmt werden.

Eine bevorzugte Ausführungsform zeichnet sich dadurch aus, dass die Sensoreinrichtung das Partikelschaummaterial während der Relativbewegung zwischen Partikelschaummaterial und thermischem Strahler erfasst. Der Prozess muss nicht unterbrochen werden, d.h. die Erfassung des Granulats sowie allfällige Anpassungen der Bestrahlungsparameter erfolgt "in-line" bzw. parallel zum Prozess (Relativbewegung, Bestrahlung).

Eine bevorzugte Ausführungsform zeichnet sich dadurch aus, dass von dem bewegten Partikelschaummaterial eine Probe entnommen wird, und die Sensoreinrichtung die entnommene Probe erfasst. Die Entnahme kann ebenfalls automatisiert erfolgen, z.B. durch Einblasen von Partikeln mittels Druckluft in eine seitlich angeordnete Messkammer.

Eine bevorzugte Ausführungsform zeichnet sich dadurch aus, dass die Sensoreinrichtung eine bildgebende Sensoreinrichtung, insbesondere eine Kamera oder eine Durchleuchtungseinrichtung, ist. Durch Bildverarbeitung können eine Vielzahl von Informationen über das Granulat gewonnen werden. Weitere Beispiele für Sensoreinrichtungen wären Waagen, Lichtschranken, Drucksensoren (bei Druckproben), etc..

Eine bevorzugte Ausführungsform zeichnet sich dadurch aus, dass die Vorrichtung einen vorzugsweise durchsichtigen Behälter umfasst und dass zumindest ein Teil des geschäumten Partikelschaummaterials in den Behälter gefördert und in dem Behälter vorübergehend gesammelt wird und dass zumindest ein Teil des im Behälter gesammelten Partikelschaummaterials durch die Sensoreinrichtung erfasst wird. Dies ermöglicht eine Erfassung von Partikeleigenschaften abseits der Förderbewegung. Insbesondere die Schüttdichte der durch die IR-Bestrahlung geschäumten Partikel kann in einem Behälter besonders einfach und zuverlässig gemessen werden.

Eine bevorzugte Ausführungsform zeichnet sich dadurch aus, dass die Sensoreinrichtung eine Einrichtung zur Erfassung des Füllstandes des Behälters, vorzugsweise in Form einer Kamera, einer Durchleuchtungseinrichtung oder eines Ultraschallsensors, ist, wobei unter Zuhilfenahme des erfassten Füllstandes des Behälters zumindest eine Eigenschaft, vorzugsweise die Schüttdichte, des geschäumten Partikelschaummaterials ermittelt wird. Das durch die Partikel im Behälter eingenommene (aus dem Füllstand ableitbare) Volumen kann mit der Masse der Partikel in Beziehung gesetzt werden, um die Schüttdichte zu erhalten. Die Masse kann durch Wägen des Behälters mit einer gesonderten Sensoreinrichtung in Form einer Waage bestimmt werden. Alternativ kann die Masse anhand des dem Prozess zugeführten Massestromes (Dosiereinrichtung), der Fördergeschwindigkeit des Partikelschaummaterials (relativ zu dem thermischen Strahler) sowie jener Zeitspanne, die bis zum Erreichen eines gemessenen Füllstandes im Behälter vergeht, ermittelt werden.

Eine bevorzugte Ausführungsform zeichnet sich dadurch aus, dass der Behälter einen Einlass und einen verschließbaren Auslass aufweist und dass zumindest ein Teil des geschäumten Partikelschaummaterials über den Einlass in den Behälter gefördert und durch Schließen des Auslasses in dem Behälter vorübergehend gesammelt wird, bevor es den Behälter über den Auslass verlässt. Der Behälter ist somit als Durchgangsbehälter ausgebildet, durch den das Partikelschaummaterial gefördert wird. Zur Bestimmung eines Materialparameters (insbesondere Schüttdichte) wird durch Verschließen des Auslasses der Partikelstrom vorübergehend aufgestaut.

Eine bevorzugte Ausführungsform zeichnet sich dadurch aus, dass nach einer vorgegebenen Zeitspanne, vorzugsweise in wiederkehrenden Abständen mit anschließender Entleerung des Behälters, der Füllstand des geschäumten Partikelschaummaterials im Behälter erfasst wird. Dies erlaubt eine einfache und zuverlässige Qualitätskontrolle ohne den Bestrahlungsvorgang bzw. die Relativbewegung des Partikelschaummaterials relativ zu dem Strahler stoppen zu müssen.

Eine bevorzugte Ausführungsform zeichnet sich dadurch aus, dass die Schüttdichte des geschäumten Partikelschaummaterials anhand eines Algorithmus ermittelt wird, der als Eingangsgrößen den nach einer vorgegebenen Zeitspanne erfassten Füllstand des geschäumten Partikelschaummaterials im Behälter und den Massestrom des Partikelschaummaterials relativ zu dem thermischen Strahler verwendet, wobei vorzugsweise der Massestrom aus der aufgegebenen Menge an Partikelschaummaterial pro Zeiteinheit und der Geschwindigkeit des Partikelschaummaterials relativ zu dem thermischen Strahler ermittelt wird.

Eine bevorzugte Ausführungsform zeichnet sich dadurch aus, dass zumindest ein Teil, vorzugsweise zumindest die Hälfte, besonders bevorzugt das gesamte, des durch den thermischen Strahler geschäumten Partikelschaummaterials durch den Behälter gefördert wird. Die Förderstrecke des Partikelschaummaterials verläuft somit teilweise oder zur Gänze durch den (Durchgangs-)Behälter. Der Behälter kann z.B. nur einen Teil des geschäumten Materials aufnehmen, z.B. nicht über die gesamte Breite der Fördervorrichtung ausgebildet sein.

Eine weitere Ausführungsform, nicht gemäß der beanspruchten Erfindung, zeichnet sich dadurch aus, dass der Behälter für eine bestimmte Dauer in wenigstens einem Teilbereich des Partikelstroms Partikelschaummaterial aufnimmt. Es kann auch vorgesehen sein, dass dieses im Behälter befindliche Partikelschaummaterial wieder der Förderstrecke zugeführt wird oder für weitere Messungen von der Förderstrecke getrennt wird.

Das Befüllen des Behälters mit Partikelschaummaterial kann auch durch Einschwenken des Behälters in eine Fallstrecke des Partikelschaummaterials erfolgen. Alternativ kann geschäumtes Partikelschaummaterial z.B. von der Förderstrecke einer Fördervorrichtung abgesaugt und in den Behälter geleitet werden. Der Behälter kann nach dem Messvorgang wieder geleert werden, z.B. durch Kippen oder durch Öffnen eines gesonderten Auslasses (z.B. eines Verschlusses im Boden oder durch Öffnen des gesamten Bodens). Alternativ kann der Behälter entnommen und gegebenenfalls durch einen anderen Behälter ausgewechselt werden. Eine bevorzugte Ausführungsform zeichnet sich dadurch aus, dass die Regelung des zumindest einen Bestrahlungsparameters ohne Unterbrechung der Bestrahlung des Partikelschaummaterials und/oder ohne Unterbrechung der Relativbewegung zwischen Partikelschaummaterial und thermischem Strahler erfolgt.

Eine bevorzugte Ausführungsform zeichnet sich dadurch aus, dass in einer das Verfahren steuernden Steuereinrichtung verschiedenen Eigenschaften des vorgeschäumten Partikelschaummaterials jeweils unterschiedliche Bestrahlungsparameter oder ein unterschiedlicher Satz von Bestrahlungsparametern zugeordnet sind, wobei vorzugweise über eine Eingabeeinrichtung zumindest eine Eigenschaft des vorgeschäumten Partikelschaummaterials vorgebbar ist.

Die Erfindung des Anspruch 15 zeichnet sich dadurch aus, dass der zumindest eine Bestrahlungsparameter das Spektrum der IR-Strahlung ist. Das Spektrum der IR-Strahlung kann beispielsweise durch gezieltes Schalten bzw. Regeln mehrerer in spektraler Hinsicht unterschiedlicher Teilstrahler des thermischen Strahlers verändert werden.

Eine bevorzugte Ausführungsform zeichnet sich dadurch aus, dass die Regelung des zumindest einen Bestrahlungsparameters durch Regelung der Strahlungsleistung und/oder des Spektrums des thermischen Strahlers und/oder durch Regelung der Relativgeschwindigkeit zwischen Partikelschaummaterial und thermischem Strahler und/oder durch Variation eines Abstandes zwischen dem thermischen Strahler und dem Partikelschaummaterial und/oder durch Einstellung der Schüttdichte des sich relativ zu dem thermischen Strahler bewegenden Partikelschaummaterials angepasst wird. Die Schüttdichte des Partikelschaummaterials auf einer Fördervorrichtung, z.B. einem Förderband, hängt von der Dosierleistung beim Aufbringen des Granulates auf die Fördervorrichtung ab und kann somit durch entsprechende Dosierung bei der Aufgabe eingestellt werden. Die durchschnittliche, in ein Partikel eingebrachte Strahlungsleistung verringert sich mit zunehmender Schüttdichte.

Eine bevorzugte Ausführungsform zeichnet sich dadurch aus, dass das Partikelschaummaterial mittels einer vorzugsweise kontinuierlich angetriebenen Fördervorrichtung durch den Strahlungsbereich des thermischen Strahlers bewegt wird, wobei vorzugsweise die Fördervorrichtung durch oder entlang einer Wärmekammer, in der der thermische Strahler angeordnet ist, verläuft.

Bevorzugt wird das Partikelschaummaterial durch Polystyrol, Polymethacrylimid, thermoplastisches Polyurethan, Polypropylen oder thermoplastisches Polybutylenterephthalat gebildet.

EPS (expandierbares Polystyrol) ist durch eingelagertes/gelöstes Treibmittel selbstexpandierend und stellt eine bevorzugte Ausführungsform dar. PMI (Polymethacrylimid) reagiert ähnlich. Für alle amorphen Kunststoffe, wie z.B. PC (Polycarbonat) oder PMMA (Polymethylmethacrylat), gilt Ähnliches. EPP (expandiertes Polypropylen) kann als teilkristalliner Kunststoff mit einer vergleichsweise niedrigen Glasübergangstemperatur Treibmittel nur kurz 'halten' und ist dementsprechend nur beschränkt selbstexpandierend; seine Verarbeitung erfolgt daher üblicherweise unter äußerer Kompression (zum Schließen der sog. 'Zwickel'). Dennoch könnte ein IR-Prozess hier interessant sein, insbesondere wenn man ihn kurz nach der Polymerisation oder einer separaten Druckbegasung zum Weiter- bzw. Nachschäumen (Ziel: Dichtereduktion vor dem Formschäumen) durchführt. Für Polyolefine, wie PP oder PE (Polyethylen), sowie technische Kunststoffe, wie z.B. PA (Polyamid) oder PBT (Polybutylenterephthalat), die i.d.R. teilkristallin sind, gilt Ähnliches.

Alternativ kann das Partikelschaummaterial teilweise oder zur Gänze aus biobasierten und/oder biologisch abbaubaren bzw. kompostierbaren Bestandteilen bestehen, beispielsweise aus Cellulose-Derivaten (wie z.B. Celluloseester), abbaubaren Kunststoffen und/oder PLA (Polymilchsäure).

In einer bevorzugten Ausführungsform wird das Partikelschaummaterial vor der Bestrahlung mittels sogenannter Druckbeladung mit Treibmittel versehen. Dadurch können auch Materialien verwendet werden, die Treibmittel nur kurz bzw. schlecht halten können (für das Weiterschäumen von teilkristallinen Thermoplasten wichtig). Außerdem kann das Partikelschaummaterial durch gezielte Dotierung mit Breitbandabsorbern (als thermische Nukleierung) vor der Bestrahlung konditioniert werden.

Bevorzugt ist die in das expansionsfähige Partikelschaummaterial eingebrachte thermische Energie derart gewählt, dass das Partikelschaummaterial über seine Glasübergangstemperatur Tg erwärmt wird, und/oder dass die Wellenlänge der vom thermischen Strahler abgegebenen Wärmestrahlung derart gewählt wird, dass sie im Wesentlichen im Bereich eines Absorptionsmaximums des Partikelschaummaterials liegt.

Bei teilkristallinen Werkstoffen ist eine Erwärmung in den Bereich der Kristallitschmelztemperatur erforderlich, um ein Erweichen der Schaumperlen zu ermöglichen. In jedem Fall wird eine Volumenerwärmung angestrebt, die nicht auf oberflächennahe Dissipation beschränkt ist.

Eine Ausführungsform, nicht gemäß der beanspruchten Erfindung, dient der Herstellung eines expansionsfähigen, vorzugsweise polymeren Schaum-Zwischenprodukts, welches auf einer Durchlaufvorrichtung ausgeführt wird. Die Durchlaufvorrichtung umfasst eine Fördervorrichtung mit einer Abgabe- und einer Entnahmevorrichtung, und eine Wärmekammer mit einem thermischen Strahler. Die Fördervorrichtung ist zumindest mit einem Teilbereich in der Wärmekammer angeordnet, und wobei die Fördervorrichtung ein darauf angeordnetes Gut, von der Abgabe- zur Entnahmevorrichtung bewegt. In einem ersten Schritt wird von der Abgabevorrichtung eine Lage von losem, expandierbarem, treibmittelhaltigem, polymeren Ausgangsprodukt auf die Fördervorrichtung abgegeben. Die Lage wird von der Fördervorrichtung in die Wärmekammer transportiert, und darin wird thermischer Energie in Form von Infrarot-Strahlung in die Lage eingebracht und diese somit erwärmt. Durch die Erwärmung der Lage kommt es zur Expansion des im Ausgangsprodukt vorhandenen Treibmittels, und dadurch zur Ausbilden eines Gasdrucks oder Dampfdrucks im Inneren des Ausgangsprodukts, einhergehend mit der Bildung einer inneren Zellstruktur, wodurch eine Volumensvergrößerung des Ausgangsprodukts stattfindet. Die Lage des somit gebildeten Schaum-Zwischenprodukts wird aus der Wärmekammer transportiert und abgekühlt. Danach wird das Schaum-Zwischenprodukt durch die Entnahmevorrichtung von der

Fördervorrichtung entnommen. Die in die Lage eingebrachte thermische Energie ist derart gewählt, dass die Temperatur des Ausgangsprodukts in der Wärmekammer zumindest in einem Teilabschnitt über der Glasübergangstemperatur Tg liegt. Ferner ist die Wellenlänge der vom thermischen Strahlers abgegebenen Wärmestrahlung derart gewählt wird, dass sie im Wesentlichen im Bereich eines Absorptionsmaximums des Materials des Ausgangsprodukts und des Treibmittels liegt.

Der besondere Vorteil dieser Ausführung liegt nun darin, dass durch die Wahl des Energieeintrags das Ausgangsmaterial soweit erwärmt werden kann, dass es in einen plastischen Zustand übergeführt wird, wodurch ein deutlich geringerer Dampfdruck zur Bildung der Zellstruktur erforderlich ist. Dadurch kann Treibmittel eingespart werden, was sowohl ökologisch, als auch ökonomisch von Vorteil ist. Zusätzlich wird durch die Wahl der Wellenlänge erreicht, dass der Energieeintrag in das Ausgangsmaterial deutlich verbessert wird, da das Material nicht nur über die Oberfläche, sondern von innen heraus erwärmt wird.

Das gewählte Absorptionsmaximum muss nicht das globale Maximum sein, sondern kann auch ein lokales Maximum sein, wenn dadurch erreicht wird, dass das Ausgangsprodukt und das Treibmittel viel Energie absorbieren.

Eine Weiterbildung besteht darin, dass die Temperatur des thermischen Strahlers derart gewählt wird, dass dieser eine elektromagnetische Strahlung mit einer Wellenlänge im Bereich von 0,8µm bis 8,0µm, vorzugsweise von 2,5µm bis 3,5µm, abgibt. Bevorzugt im Bereich von 3,3µm, da Polystyrol in diesem Wellenlängenbereich ein lokales Absorptionsmaximum hat. Ein Einwirken von elektromagnetischer Strahlung mit einer Wellenlänge in einem solchen Absorptionsmaximum führt zur Anregung von Schwingungen der Molekülbindungen im Makromolekül, was einen Temperaturanstieg des Materials zur Folge hat. Mit der Erkenntnis des sogenannten Wien'schen Verschiebungsgesetzes kann die Emission des Strahlers so eingestellt werden, dass es dem Absorptionsprofil des zu bestrahlenden Materials entspricht. Es ergibt sich somit der Einsatz mittelwelliger IR-Strahler, mit einer Oberflächentemperatur von etwa 800 - 900°C.

Eine weitere Ausbildung besteht auch darin, dass als Treibmittel Pentan verwendet wird. Pentan hat ein lokales Absorptionsmaximum für elektromagnetische Strahlung im thermischen Bereich, insbesondere im Bereich um 3,3µm, und eignet sich somit besonders gut für das gegenständliche Verfahren. Das Treibmittel in Polystyrol wirkt als starker Weichmacher und senkt dessen Glasübergangspunkt (Tg) deutlich ab (Tg von EPS mit 5 % Pentan liegt bei ca. 40 °C), wodurch dieses bei den angelegten Temperaturen sehr weich wird. Durch die Wärmeeinwirkung beim Vorschäumen werden die Rohstoffperlen plastisch. Innerhalb der Perlen steigt der Pentan-Dampfdruck temperaturbedingt auf über 1 bar. Es bilden sich kleine Zellen innerhalb der Perlen und eine Schaumstruktur entsteht.

Von Vorteil ist ferner eine Weiterbildung, nach der die Fördervorrichtung von einem Antriebsmittel kontinuierlich angetrieben wird. Somit wird eine kontinuierliche Herstellung des Schaum-Zwischenprodukts ermöglicht. Insbesondere ist keine Unterbrechung zur Zwischenlagerung des Schaum-Zwischenprodukts erforderlich, wie sie aus dem Stand der Technik bekannt ist. Aufgrund des vereinfachten Herstellungsverfahrens lässt sich der Produktionsdurchsatz deutlich erhöhen.

Nach einer Weiterbildung ist vorgesehen, dass die je Zeiteinheit in die Lage eingebrachte thermische Energie je derart gewählt ist, dass sich über die gesamte Dicke der Lage, eine gleichmäßige Zellgröße der Zellstruktur im Ausgangsprodukt bildet. Im Gegensatz zu bekannten thermischen Vorschäum-Verfahren ist es gemäß dieser Weiterbildung möglich, den Energieeintrag in das Ausgangsprodukt so zu gestalten, dass über das gesamte Volumen des Ausgangsprodukts, eine gleichmäßige Erwärmung erreichbar ist. Für die Erreichung einer gleichmäßigen Zellgröße- bzw. Struktur (Zellmorphologie) ist dies von besonderer Bedeutung.

Die Wahl des Energieeintrags kann bei mehreren Parametern ansetzen. Ein möglicher Ansatz besteht darin, dass die Verweildauer der Lage in der Wärmekammer gewählt wird. Die Fördergeschwindigkeit der Fördervorrichtung, und/oder die Länge der Wärmekammer in Förderrichtung bzw. die Länge des thermischen Strahlers, sind direkt proportional zur Verweildauer der Lage in der Wärmekammer. Der Energieeintrag kann auch durch den Abstand zwischen thermischen Strahler und Lage beeinflusst werden.

Eine Weiterbildung besteht darin, dass die Abkühlung mittels freier Luftkühlung, oder unter Schutzgasatmosphäre durchgeführt wird. Durch und bei dem Aufschäumvorgang entweichen Teile des Treibmittels, welche in der anschließenden Abkühlphase zum Teil durch Elemente des umgebenden Raums ersetzt werden, insbesondere Luft und ggf. auch Feuchtigkeit. Eine Feuchtigkeitseinlagerung ist für die Erzielung einer geringen Wärmeleitfähigkeit jedoch nachteilig. Durch eine Abkühlung unter einer Schutzgasatmosphäre lässt sich genau festlegen, welche Elemente in den abkühlenden Zellen eingelagert werden.

Von Vorteil ist auch eine Weiterbildung, nach der die in das Partikelschaummaterial eingebrachte thermische Energie derart gewählt ist, dass die Schmelztemperatur des Partikelschaummaterials nicht überschritten wird. Wird das Ausgangsprodukt über die Schmelztemperatur erwärmt, kommt wird es zum Verklebungen des im Ausgangszustand losen, und nun aufschäumenden Ausgangsprodukts kommen, was einen aufwändigen Separationsprozess erforderlich machen würde. Mit der Weiterbildung ist gewährleistet, dass das aufschäumende Ausgangsprodukts lose bleibt, und als loses Schaum-Zwischenprodukt die Wärmekammer verlässt.

Eine Weiterbildung besteht darin, dass die in die Lage eingebrachte thermische Energie durch Regelung der Strahlungsleistung der thermischen Strahler und/oder durch Regelung der Fördergeschwindigkeit und/oder durch Variation eines Abstandes zwischen dem thermischen Strahler und der Fördervorrichtung angepasst wird. Um die Prozesszeiten kurz zu halten, soll selbstverständlich in möglichst kurzer Zeit das Ausgangsprodukt erwärmt werden. Ein zu großer Energiestrom birgt jedoch die Gefahr, dass das Ausgangsprodukt ungleichmäßig erwärmt wird. Ferner besteht die Gefahr, dass es zu lokalen Überhitzungen kommt. Beide Effekte wirken sich negativ auf die erreichbare Zellstruktur bzw. Zellmorphologie aus. Eine Variation der Strahlungsleistung ist möglich, allerdings nur im kleinen Bereich, da sich dabei auf die Wellenlänge der ausgesandten thermischen Strahlung ändern wird. Bei gleichbleibender Strahlungsleistung kann bspw. durch Variation der Fördergeschwindigkeit die Dauer des Verbleibs der Lage im Bereich der thermischen Strahler beeinflusst werden, was direkt der in die Lage eingebrachten Energie proportional ist. Anlog gilt dies auch für eine Variation des Abstandes zwischen dem thermischen Strahler und der Fördervorrichtung.

Nach einer Weiterbildung ist vorgesehen, dass der thermische Strahler segmentiert ausgebildet ist, und die einzelnen Segmente eine unterschiedliche Energiestromdichte abgeben. Um die benötigte Energiemenge gleichmäßig einbringen zu können, kann es erforderlich sein, ein Energiestrom-Profil längs des Förderwegs durch die Wärmekammer auszubilden. Dies kann bspw. durch Strahlersegmente mit unterschiedlich dicht angeordneten Heizelementen erreicht werden. Oder die Strahlersegmente sind in unterschiedlichem Abstand zur Lage angeordnet.

Eine Weiterbildung besteht darin, dass das Volumen des Partikelschaummaterials durch die Bestrahlung um zumindest 30%, vorzugsweise um zumindest 50%, besonders bevorzugt um zumindest 100% vergrößert wird. Mit dieser Weiterbildung lässt sich ein vorgeschäumtes Schaum-Zwischenprodukt erzeugen, welches optimal an einen nachfolgenden Formbildungsschritt angepasst werden kann. Diese Ausführungsform bezieht sich insbesondere auf Vorschäumprozesse. An dieser Stelle sei daher erwähnt, dass in Weiter- oder Nachschäumprozessen üblicherweise nur (mehr) geringe Volumenänderungen erfolgen.

Eine Weiterbildung besteht auch darin, dass im Partikelschaummaterial ein Füllstoff angeordnet ist, wobei durch diesen Füllstoff ein gleichmäßiges Zellwachstum hervorgerufen wird. Bevorzugt ist der Füllstoff durch Graphitpartikel und/oder Graphit-Nanopartikel gebildet. Ein Füllstoff kann ähnlich einem Kondensationskeim, als Störstelle in weitestgehend homogenem Gefüge des Ausgangsprodukts angesehen werden. Bei der Erwärmung der Lage wird es um die einzelnen Partikel zu Störungen in der gleichmäßigen Temperaturverteilung kommen, was die Bildung einer Zelle begünstigt. Durch eine gleichmäßige Verteilung dieses Füllstoffs im Ausgangsprodukt, lässt sich bei gleichmäßiger Erwärmung eine sehr homogene Zellstruktur mit weitestgehend gleich großen Zellen erreichen. In die PS-Matrix eingebrachte Graphit-Nanopartikel wirken bei niedrigen Schaumdichten zusätzlich als breitbandiger IR-Absorber, um erhöhen somit den Energieeintrag in den Ausgangsstoff. Auch können Graphit-Nanopartikel als Nukleirungsmittel dienen und zu einer feineren Zellmorphologie des Schaum-Zwischenprodukts führen. Zudem führt die Einbringung von Graphit zur Verringerung des strahlungsbasierten Wärmetransports bei einem späteren Einsatz als Wärmedämmung.

Von Vorteil für eine gleichmäßige und schnelle Erwärmung des Ausgangsprodukts ist eine Weiterbildung, nach der im Partikelschaummaterial ein Füllstoff angeordnet ist, wobei dieser Füllstoff Strahlung im Wellenlängenbereich des thermischen Strahlers absorbiert. Somit wird eine Erwärmung im Inneren des Ausgangsprodukts erreicht, was insgesamt zu einer schnelleren Erwärmung der Lage führen wird.

Nach einer Weiterbildung ist vorgesehen, dass von der Abgabevorrichtung die Lage durch dosiertes Aufgeben von losem Mikrogranulat gebildet wird, welches Mikrogranulat als Kugeln, Perlen oder Schnipsel bereitgestellt wird.

Eine weitere vorteilhafte Weiterbildung besteht darin, dass die Durchlaufvorrichtung ein Bilderfassungssystem aufweist, welches das vorgeschäumte Partikelschaummaterial (Schaum-Zwischenprodukt) erfasst und mittels Bildanalyseverfahren aus dem erfassten Abbild, eine Dichte des Partikelschaummaterials ermittelt. Mit dieser Weiterbildung kann kontaktlos und insbesondere im laufenden Prozess, die Dichte des vorgeschäumten Schaum-Zwischenprodukts ermittelt werden. Bei einer erkannten Abweichung von einem geforderten Sollwert, können die Prozessparameter sofort angepasst werden, insbesondere Durchlaufgeschwindigkeit und Energiestrom.

Das Ziel der Erfindung wird auch gelöst durch eine Vorrichtung gemäß Anspruch 26.

Die Vorrichtung umfasst zumindest eine mit der Steuereinrichtung verbundene Sensoreinrichtung zur Erfassung des Partikelschaummaterials, vorzugsweise eine bildgebende Sensoreinrichtung, insbesondere eine Kamera oder eine Durchleuchtungseinrichtung. Die Steuereinrichtung kann ebenfalls mit dem Antrieb der Fördervorrichtung verbunden sein, um dadurch z.B. die Bestrahlungsdauer (Durchlaufzeit) einzustellen.

Die Vorrichtung ist bevorzugt zur Durchführung eines erfindungsgemäßen Verfahrens ausgebildet.

Eine bevorzugte Ausführungsform zeichnet sich dadurch aus, dass die Fördervorrichtung durch den Erfassungsbereich der zumindest einen Sensoreinrichtung verläuft, wobei vorzugsweise der Erfassungsbereich in Förderrichtung der Fördervorrichtung gesehen nach dem Strahlungsbereich des thermischen Strahlers liegt.

Eine bevorzugte Ausführungsform zeichnet sich dadurch aus, dass die Fördervorrichtung durch oder entlang einer Wärmekammer, in der der thermische Strahler angeordnet ist, verläuft. In der Wärmekammer, die den Bestrahlungsbereich umschließt, können reproduzierbare, von äußeren Einflüssen weitgehend unabhängige Bedingungen hergestellt werden.

Eine bevorzugte Ausführungsform zeichnet sich dadurch aus, dass die Vorrichtung einen vorzugsweise durchsichtigen Behälter zum vorübergehenden Sammeln von geschäumtem Partikelschaummaterial umfasst, wobei sich zumindest ein Teil des Behälters im Erfassungsbereich der Sensoreinrichtung befindet, wobei vorzugsweise die Sensoreinrichtung eine Einrichtung zur Erfassung des Füllstandes des Behälters, vorzugsweise in Form einer Kamera, einer Durchleuchtungseinrichtung oder eines Ultraschallsensors, ist.

Eine bevorzugte Ausführungsform zeichnet sich dadurch aus, dass der Behälter einen Einlass und einen verschließbaren Auslass aufweist, wobei vorzugsweise die Vorrichtung einen mit der Steuereinrichtung verbundenen Aktuator zum Verschließen des Auslasses aufweist. Durch den Aktuator können die (z.B. in regelmäßigen Abständen wiederkehrenden) Messvorgänge - insbesondere betreffend den Füllstand des Behälters - automatisiert werden.

Eine bevorzugte Ausführungsform zeichnet sich dadurch aus, dass der Behälter einen von oben nach unten kleiner werdenden Querschnitt aufweist, wobei vorzugsweise der Behälter trichterförmig ausgebildet ist. Durch diese Maßnahme können auch geringe Befüllungen des Behälters einfach und vor allem genau erfasst werden, da der geringere Querschnitt im Bodenbereich auch bei wenig Material bereits eine leicht detektierbare Füllhöhe bewirkt.

Eine bevorzugte Ausführungsform zeichnet sich dadurch aus, dass der Behälter in jenem Endbereich der Fördereinrichtung, der sich stromabwärts des thermischen Strahlers befindet, angeordnet ist, wobei gegebenenfalls der Behälter durch eine Fallstrecke von der Fördereinrichtung beabstandet ist. Dies ermöglicht einen nahtlosen Übergang von der Förderstrecke in den (Mess-)Behälter.

Die Aufgabe der Erfindung wird auch durch ein (vor)geschäumtes Partikelschaummaterial gemäß Anspruch 33 gelöst.

Der besondere Vorteil des gegenständlichen Schaum-Zwischenprodukts liegt darin, dass im Querschnitt, die Zellstruktur des Schaumes weitestgehend regelmäßig ausgebildet ist. Eine solche Zellmorphologie, also möglichst regelmäßige Verteilung möglichst gleich großer Zellen oder Schaumporen, ist für die mechanischen und thermischen Eigenschaften des Schaummaterials von ganz besonderer Bedeutung. Bei einer gleichmäßigen Zellmorphologie wird eine hohe Druckfestigkeit, bei gleichzeitig geringer Wärmeleitfähigkeit erreicht.

Erfindungsgemäß-bei Verwendung von Polystyrol als Partikelschaummaterial - eine Abmessung einer Mehrzahl der Zellen der Zellstruktur kleiner 100µm, vorzugsweise kleiner als 50µm, besonders bevorzugt kleiner als 30µm ist. Mit dieser Ausbildung hat das Schaum-Zwischenprodukt im Vergleich zu bekannten Zwischenprodukten eine deutlich kleinere Zellstruktur.

Ebenfalls von besonderem Vorteil ist eine weitere Ausbildung, nach der - insbesondere bei Verwendung von Polystyrol als Partikelschaummaterial - die Wärmeleitfähigkeit der Partikel des Schaummaterials kleiner 30 W/K beträgt, insbesondere kleiner 28 W/K. Dies hat im Hinblick auf eine Verwendung des Schaum-Zwischenprodukts zur Bildung von Wärmedämmplatten den Vorteil, dass mit gleicher Dicke, eine deutlich bessere Wärmeisolation erreichbar ist.

Von Vorteil ist auch eine Weiterbildung, nach der in der Zellstruktur noch ein Anteil des ursprünglich vorhandenen Treibmittels enthalten ist. In nachfolgenden Prozessschritten wird aus dem Schaum-Zwischenprodukt ein Endprodukt gefertigt, bspw. Wärmedämmplatten. Dazu ist es von Vorteil, wenn im Schaum-Zwischenprodukt noch eine ausreichende Menge an Treibmittel vorhanden ist, um im den folgenden Form-Schaumprozess, das Schaum-Zwischenprodukt auf das endgültige, gewünschte Volumen aufschäumen zu können.

Eine weitere Ausbildung besteht auch darin, dass - insbesondere bei Verwendung von Polymethacrylimid als Partikelschaummaterial - die Dichte des Partikelschaummaterials höchstens 30 g/l beträgt.

Zum besseren Verständnis der Erfindung wird diese anhand der nachfolgenden Figuren näher erläutert.

Es zeigen jeweils in stark vereinfachter, schematischer Darstellung:
- Fig. 1: eine schematisierte Vorrichtung zur Durchführung des gegenständlichen Verfahrens;
- Fig. 2 a) und b): eine Zellmorphologie eines mit Wasserdampf vorgeschäumten Zwischenprodukts;
- Fig. 3 a) und b): eine Zellmorphologie eines mit dem gegenständlichen Verfahren vorgeschäumten Zwischenprodukts;
- Fig. 4: eine Ausführungsform einer erfindungsgemäßen Vorrichtung mit Sensoreinrichtungen
- Fig. 5: eine Ausführungsform einer erfindungsgemäßen Vorrichtung mit alternativer Sensoreinrichtung.

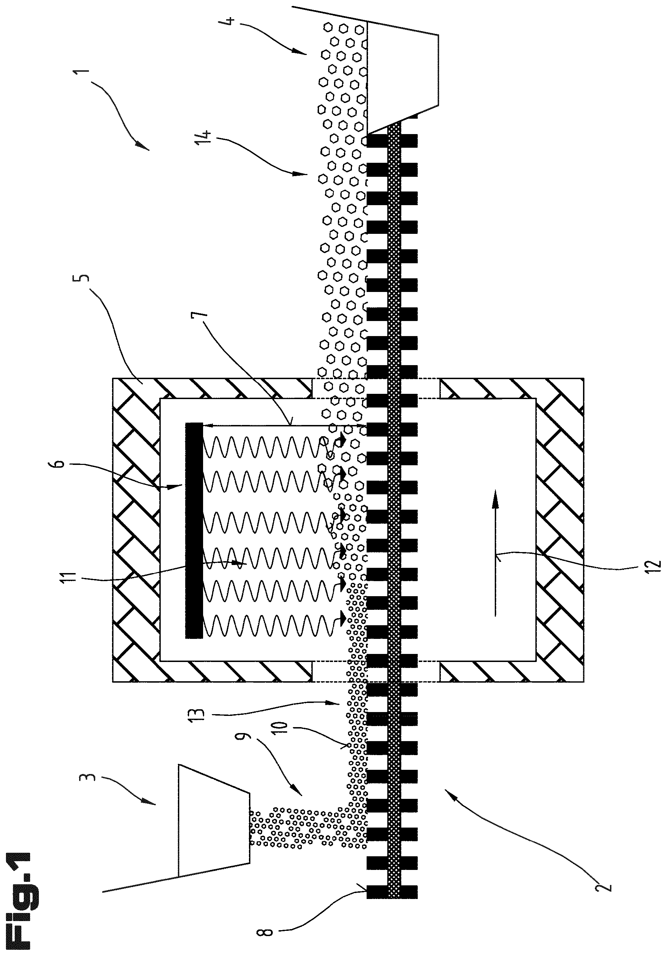

Fig. 1 zeigt eine Vorrichtung 1 in Form einer Durchlaufvorrichtung zur Durchführung des gegenständlichen Herstellungsverfahrens. Die (Durchlauf)Vorrichtung 1 umfasst eine Fördervorrichtung 2 mit einer Abgabe- 3 und einer Entnahmevorrichtung 4, wobei die Fördervorrichtung 2 zumindest mit einem Teilbereich in einer Wärmekammer 5 angeordnet ist. In der Wärmekammer 5 ist ein thermischer Strahler 6 in einem Abstand 7 zur Oberfläche 8 der Fördervorrichtung 2 angeordnet. Der Abstand 7 des thermischen Strahlers 6 zur Oberfläche 8 ist dabei bevorzugt verstellbar ausgeführt.

Das expansionsfähige Partikelschaummaterial 13 (Ausgangsprodukt) wird in Form eines Granulats durch das Strahlungsfeld des thermischen Strahlers 6 geführt. Das derart vorgeschäumte Partikelschaummaterial 14 wird nachfolgend auch als Zwischen-Schaumprodukt bezeichnet.

Ein elektrisch betriebener thermischer Strahler 6 besteht in der Regel aus einem Metallgehäuse, das für die nötige Stabilität sorgt. Im Metallrahmen ist Isolationsmaterial integriert, welches den Energiefluss zur Strahlerrückseite blockiert. Durch eine gewellte Metallfolie als Widerstandsmaterial, ist für eine große Abstrahlfläche gesorgt. Meist folgt frontseitig noch ein Schutzgitter, das vor mechanischer Beschädigung und Berührung schützt. Ein so aufgebauter IR-Strahler zeichnet sich durch eine flächige Strahlung aus. Dabei werden 92 % der eingesetzten Energie direkt zum behandelten Produkt abgestrahlt, was den Einsatz von Reflektoren überflüssig macht. Zudem muss keine Kühlung eingesetzt werden, wodurch auch kein Energieverlust entsteht. Ein solcher Strahler kann mit einer Temperatur von 850°C betrieben werden, was einer Wellenlänge von ca. 3,5µm entspricht.

Beim Vorschäumprozess mittels IR-Strahlung im Bereich von 3,3µm sorgt die in die Lage 10 aus expansionsfähigem Partikelschaummaterial 13 eingebrachte Strahlung dafür, dass sich sowohl die Lage 10 (beispielsweise Polystyrol), als auch das im Mikrogranulat gelöste Treibmittel, gemäß einer bevorzugten Ausführung Pentan, erwärmen. Bei einer beispielhaften Ausführungsvariante betreffend mit Pentan als Treibmittel beladenen Polystyrol, hat in diesem Wellenlängenbereich sowohl Polystyrol, als auch Pentan ein lokales Absorptionsmaximum, wobei schäumbare Kunststoffe infrarote Strahlung im Bereich zwischen etwa 2,5 µm 3,5 µm generell besonders gut absorbieren, und sich dadurch effizient erwärmen lassen. Da der Tg (Glasübergang) des mit Pentan beladenen PS-Mikrogranulats nur bei etwa 40°C liegt, wird dieses infolge der Erwärmung weich und gut verformbar. Das gasförmige Pentan kann nun expandieren, wobei sich eine Schaumstruktur im PS ausbildet.

Im Laufe der Untersuchungen zu dieser Erfindung wurde zum Beispiel PS-Mikrogranulat mit verschiedenen Pentangehalten untersucht, da der Pentangehalt des Mikrogranulats einen direkten Einfluss auf den Glasübergang (Tg) von Polystyrol hat. So wird der Tg mit sinkendem Pentangehalt steigen. In ersten Messungen konnte dies auch festgestellt werden. So wurde bei einem Pentangehalt von 6,7 % ein Tg von 47°C gemessen, bei 4,6 % Pentan lag der Tg schon bei 83°C und bei 3,7 % Pentan war der Tg bereits auf 95°C gestiegen. Das bedingt zwar höhere Temperaturen beim Vorschäumen, hat aber auch den Vorteil einer besseren Lagerstabilität des Mikrogranulats.

Von der Abgabevorrichtung 3 wird loses, expansionsfähiges, teibmittelhaltiges, z.B. polymeres Ausgangsprodukt 9 als Lage 10 mit einer definierbaren Dicke auf die Oberfläche 8 der Fördervorrichtung 2 aufgebracht (expansionsfähiges Partikelschaummaterial 13). Die Fördervorrichtung 2 wird von nicht dargestellten Antriebsmittel kontinuierlich angetrieben, und bewegt somit die Lage 10 kontinuierlich von der Abgabevorrichtung 3 durch die Wärmekammer 5 zur Entnahmevorrichtung 4.

Vom thermischen Strahler 6 wird IR-Strahlung 11 in Richtung der Lage 10 abgegeben, wodurch sich diese erwärmt. Durch die Bewegung 12 der Lage 10 im Bereich der IR-Strahlung 11 führt die Erwärmung der Lage 10 zu einem Aufschäumvorgang des Partikelschaummaterials 13 und einer damit verbundenen Volumensvergrößerung. Der Aufschäumgrad und die damit verbundene Volumensvergrößerung hängen nun von den Kenngrößen der Wärmekammer 5 und der Bewegungsgeschwindigkeit durch die Wärmekammer 5 ab. Beispielhafte IR-Prozessparameter sind Leistung, Wellenlänge, Vorschub bzw. Verweilzeit im Strahlungsfeld. Die Prozessparameter sind u.a. abhängig von der Art und Partikelgröße des Partikelschaummaterials und den gewünschten Eigenschaften des vorgeschäumten Zwischen- oder Endprodukts.

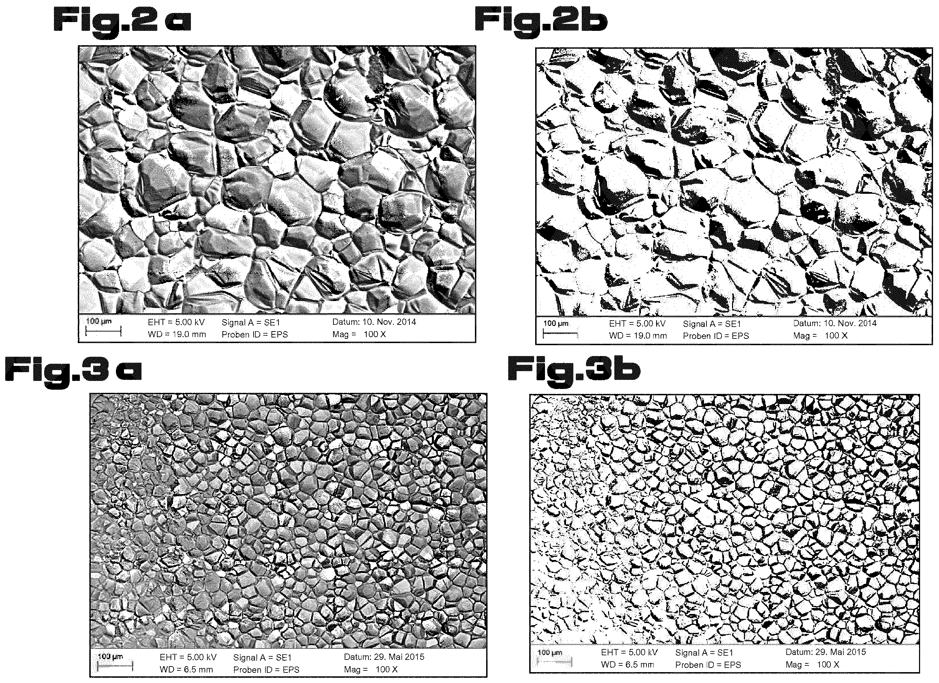

Die Fig. 2 und 3 zeigen einen Vergleich der Zellmorphologie von wasserdampfvorgeschäumten und nach dem gegenständlichen Verfahren vorgeschäumten Partikelschaummaterial 14. Fig. 2 zeigt die Zellmorphologie eines wasserdampfgeschäumten Schaum-Zwischenprodukts, Fig. 3 zeigt im gleichen Maßstab die Zellmorphologie eines mit dem gegenständlichen Verfahren hergestellten Partikelschaummaterials 14. Die Figuren a zeigen jeweils ein Graustufenbild einer REM-Aufnahme, in den Figuren b wurden die Bilder so bearbeitet, dass die Zellstruktur, insbesondere die Zellwände, verstärkt hervortreten.

Da bei beiden Fig. 2 und 3 der gleiche Maßstab verwendet wird, ist sofort augenscheinlich erkennbar, dass das IR vorgeschäumte Partikelschaummaterial 14 (Fig. 3) eine deutlich kleinere Zellgröße und eine wesentlich homogenere Zellmorphologie aufweist. In Fig. 2 ist erkennbar, dass neben sehr großen Zellen, auch eine Vielzahl von sehr kleinen Zellen zwischen den großen Zellen angeordnet ist. Kleine Zellen haben jedoch den Nachteil, dass damit eine größere Materialkonzentration einhergeht, was direkt auch eine verbesserte Wärmeleitung bzw. Verschlechterung der wärmedämmenden Eigenschaften bewirkt. Demgegenüber ist aus Fig. 3 zu erkennen, dass nur eine sehr geringe Größenvariation der Zellen über den dargestellten Querschnitt gegeben ist, was einerseits eine gleichmäßige, mechanische Festigkeit und insbesondere eine gleichmäßig geringe Wärmeleitfähigkeit bedeutet.

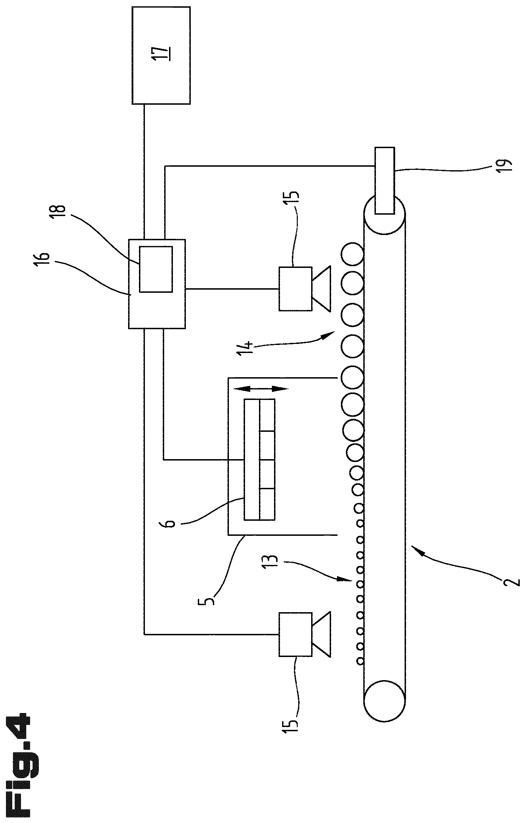

Fig. 4 zeigt eine besonders bevorzugte Ausführungsform einer Vorrichtung zur Herstellung eines vorgeschäumten Partikelschaummaterials 14, umfassend einen thermischen Strahler 6 zur Bestrahlung von expansionsfähigem Partikelschaummaterial 13 und eine Fördervorrichtung 2 zum Fördern des Partikelschaummaterials 13 durch den Strahlungsbereich des thermischen Strahlers 6. Die Vorrichtung 1 weist eine Steuereinrichtung 16 auf, die zur Einstellung zumindest einer Eigenschaft des vorgeschäumten Partikelschaummaterials 14 eine Regelung 18 zumindest eines Bestrahlungsparameters (z.B. Bestrahlungsdauer, Bestrahlungsintensität und/oder das Spektrum der IR-Strahlung). In der dargestellten Ausführungsform umfasst die Vorrichtung auch eine mit der Steuereinrichtung kommunikationsverbundene Eingabeeinrichtung (z.B. in Form einer Tastatur oder einer Funk-Fernbedienung), mit der der Bediener die gewünschte Eigenschaft des entstehenden Granulats oder die Bestrahlungsparameter eingeben kann. Zusätzlich oder alternativ erfolgt die Regelung in Abhängigkeit von Sensordaten.

Die Vorrichtung 1 umfasst hier zwei, mit der Steuereinrichtung 16 verbundene Sensoreinrichtungen 15 zur Erfassung des Partikelschaummaterials 13, 14 vor, und nach der Bestrahlung. Zusätzlich könnte auch in der Wärmekammer 5 eine Sensoreinrichtung angeordnet sein, um den Vorschäumprozess als solchen zu überwachen.

Die hier bildgebenden Sensoreinrichtungen 15 können insbesondere als Kamera oder Durchleuchtungseinrichtung ausgebildet sein.

Die Fördervorrichtung 2 verläuft dabei durch den Erfassungsbereich der jeweiligen Sensoreinrichtungen 15. Die Fördervorrichtung 2 verläuft durch oder entlang der Wärmekammer 5, in der der thermische Strahler 6 angeordnet ist.

Die Vorrichtung 1 eignet sich zur Durchführung eines Verfahrens zur Herstellung eines vorgeschäumten Partikelschaummaterials 14, bei dem expansionsfähiges, vorzugsweise polymeres Partikelschaummaterial 13 in Form eines Granulats mittels eines thermischen Strahlers 6 bestrahlt wird. Das Partikelschaummaterial 13 wird (mit der Fördereinrichtung 2) relativ zu dem thermischen Strahler 6 bewegt. Zumindest eine Eigenschaft des entstehenden vorgeschäumten Partikelschaummaterials 14 wird durch Regelung von zumindest einem Bestrahlungsparameter eingestellt.

Die Regelung von zumindest einem Bestrahlungsparameter kann voll- oder teilautomatisiert in Abhängigkeit von Sensordaten zumindest einer (hier: zwei) Sensoreinrichtung 15 erfolgen, die das Partikelschaummaterial 13, 14 vor, während und/oder nach der Bestrahlung erfasst.

Aus den Sensordaten kann zumindest eine Eigenschaft des erfassten Partikelschaummaterials 13, 14, vorzugsweise die Partikelgröße, das Partikelgewicht, die Dichte, die innere Struktur und/oder die Oberflächenbeschaffenheit, ermittelt werden.

Zur Regelung des zumindest einen Bestrahlungsparameters kann auch zumindest eine Eigenschaft des noch nicht bestrahlten Partikelschaummaterials 13 mit den Sensordaten oder mit zumindest einer, aus den Sensordaten ermittelten Eigenschaft des bestrahlten Partikelschaummaterials 14 in Beziehung gesetzt werden.

Bevorzugt wird wenn, die Sensoreinrichtung(en) 15 das Partikelschaummaterial 13, 14 während der Relativbewegung zwischen Partikelschaummaterial 13, 14 und thermischem Strahler 6 erfasst. Alternativ könnte auch von dem bewegten Partikelschaummaterial 14 eine Probe entnommen werden, und eine Sensoreinrichtung die entnommene Probe erfassen.

Die Regelung des zumindest einen Bestrahlungsparameters erfolgt bevorzugt ohne Unterbrechung der Bestrahlung des Partikelschaummaterials 13 und/oder ohne Unterbrechung der Relativbewegung zwischen Partikelschaummaterial 13 und thermischem Strahler 6.

In einer das Verfahren steuernden Steuereinrichtung 16 können verschiedenen Eigenschaften des vorgeschäumten Partikelschaummaterials 14 jeweils unterschiedliche Bestrahlungsparameter oder ein unterschiedlicher Satz von Bestrahlungsparametern zugeordnet sein. Über eine Eingabeeinrichtung 17 kann dabei zumindest eine Eigenschaft des vorgeschäumten Partikelschaummaterials 14 vorgebbar sein.

Die Regelung des zumindest einen Bestrahlungsparameters kann durch Regelung der Strahlungsleistung und/oder des Spektrums des thermischen Strahlers 6 und/oder durch Regelung der Relativgeschwindigkeit zwischen Partikelschaummaterial 13 und thermischem Strahler 6 (d.h. Fördergeschwindigkeit der Fördervorrichtung 2) und/oder durch Variation eines Abstandes zwischen dem thermischen Strahler 6 und dem Partikelschaummaterial 13 und/oder durch Einstellung der Schüttdichte des sich relativ zu dem thermischen Strahler bewegenden Partikelschaummaterials 13 angepasst werden.

Das Partikelschaummaterial 13 wird vorzugsweise mittels einer kontinuierlich angetriebenen Fördervorrichtung 2 durch den Strahlungsbereich des thermischen Strahlers 6 bewegt. Der Antrieb 19 der Fördereinrichtung 2 ist ebenfalls mit der Steuereinrichtung 16 verbunden und wird von dieser gesteuert.

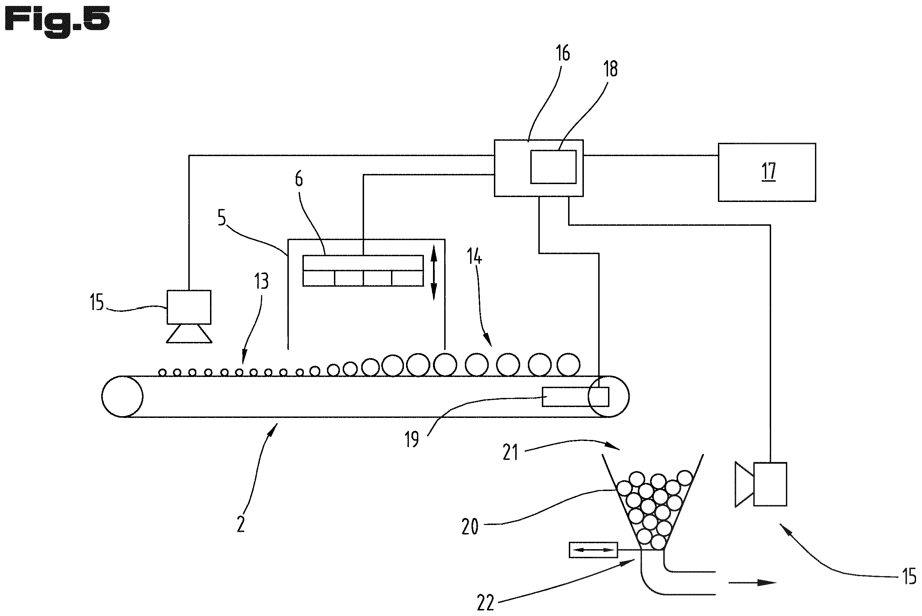

Fig. 5 zeigt eine Ausführungsform einer erfindungsgemäßen Vorrichtung 1, die sich von jener aus Fig. 4 durch die Ausbildung der Sensoreinrichtung 15 zur Erfassung des Partikelschaummaterials 14 nach der Bestrahlung unterscheidet.

Die Vorrichtung 1 umfasst hier - zum vorübergehenden Sammeln von geschäumtem Partikelschaummaterial 14 - einen Behälter 20, der einen Einlass 21 und einen verschließbaren Auslass 22 aufweist, und eine Sensoreinrichtung 15 zur Erfassung insbesondere des Füllstandes des Behälters 20. In der dargestellten Ausführungsform ist diese Einrichtung eine Kamera. Alternativ könnte die Erfassungseinrichtung z.B. als Durch- oder Auflichtsensor oder als Ultraschallsensor ausgebildet sein.

Das geschäumte Partikelschaummaterial 14 wird in den Behälter 20 gefördert und durch Schließen des Auslasses 22 (vorzugsweise durch einen von der Steuereinrichtung 16 angesteuerten Aktuators) in dem Behälter 20 vorübergehend gesammelt. Nach einer vorgegebenen Zeitspanne nach dem Schließen des Auslasses 22, vorzugsweise in wiederkehrenden Abständen mit anschließender Entleerung des Behälters 20 über den Auslass 22, - oder alternativ: während des Füllvorganges, z.B. kontinuierlich - wird der Füllstand des geschäumten Partikelschaummaterials 14 im Behälter 20 ermittelt. Dabei kann unter Zuhilfenahme des ermittelten Füllstandes zumindest eine Eigenschaft, vorzugsweise die Schüttdichte, des geschäumten Partikelschaummaterials 14 ermittelt werden.

Z.B. kann die Schüttdichte des geschäumten Partikelschaummaterials 14 anhand eines Algorithmus ermittelt werden, der als Eingangsgrößen den nach einer vorgegebenen Zeitspanne ermittelten Füllstand des geschäumten Partikelschaummaterials 14 im Behälter 20 und den Massestrom des Partikelschaummaterials 13 relativ zu dem thermischen Strahler 6 verwendet. Dabei kann der Massestrom aus der - auf die Fördervorrichtung 2 - aufgegebenen Menge an Partikelschaummaterial 13 pro Zeiteinheit und der Geschwindigkeit des Partikelschaummaterials 13 relativ zu dem thermischen Strahler 6 (entspricht im Wesentlichen der Geschwindigkeit der Fördervorrichtung 2) ermittelt werden.

Wie aus Fig. 5 ersichtlich kann der Behälter 20 einen von oben nach unten kleiner werdenden Querschnitt aufweisen, insbesondere trichterförmig ausgebildet sein. Zur Automatisierung des Messvorganges kann die Vorrichtung 1 einen mit der Steuereinrichtung 16 verbundenen Aktuator zum Verschließen (bzw. Öffnen) des Auslasses 22 aufweisen.

Bei der dargestellten Variante werden dem Partikelstrom keine Proben entnommen, sondern es wird das gesamte durch den thermischen Strahler 6 geschäumte Partikelschaummaterial 14 durch den Behälter 20 gefördert. Der Behälter 20 ist in jenem Endbereich der Fördereinrichtung 2, der sich stromabwärts des thermischen Strahlers 6 befindet, angeordnet ist. Der Einlass 21 des Behälters 20 kann durch eine Fallstrecke von der Fördereinrichtung 2 beabstandet sein.

In alternativen Ausführungsformen, nicht gemäß der beanspruchten Erfindung, kann das Befüllen des Behälters mit Partikelschaummaterial durch Einschwenken des Behälters in eine Fallstrecke des Partikelschaummaterials erfolgen. Alternativ kann geschäumtes Partikelschaummaterial z.B. von der Förderstrecke einer Fördervorrichtung abgesaugt und in den Behälter geleitet werden. Der Behälter kann nach dem Messvorgang wieder geleert werden, z.B. durch Kippen oder durch Öffnen eines gesonderten Auslasses (z.B. eines Verschlusses im Boden oder durch Öffnen des gesamten Bodens). Alternativ kann der Behälter entnommen und gegebenenfalls durch einen anderen Behälter ausgewechselt werden.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten des Herstellungsverfahrens sowie des Schaum-Zwischenprodukts, wobei an dieser Stelle bemerkt sei, dass die Erfindung nicht auf die speziell dargestellten Ausführungsvarianten derselben eingeschränkt ist, sondern durch die beigefügten Ansprüche definiert wird.

### Bezugszeichenaufstellung

- 1: Durchlaufvorrichtung
- 2: Fördervorrichtung
- 3: Abgabevorrichtung
- 4: Entnahmevorrichtung
- 5: Wärmekammer
- 6: thermischen Strahler
- 7: Abstand
- 8: Oberfläche
- 9: Ausgangsprodukt
- 10: Lage
- 11: IR-Strahlung
- 12: Bewegung
- 13: expansionsfähiges Partikelschaummaterial
- 14: Vorgeschäumtes Partikelschaummaterial
- 15: Sensoreinrichtung
- 16: Steuereinrichtung
- 17: Eingabeeinrichtung
- 18: Regelung
- 19: Antrieb
- 20: Behälter
- 21: Einlass
- 22: Auslass

## Patentansprüche

1. Verfahren zur Herstellung eines geschäumten Partikelschaummaterials (14) in Form eines Granulats, bei dem expansionsfähiges Partikelschaummaterial (13) in Form eines Granulats mittels eines thermischen Strahlers (6) bestrahlt wird, wobei das Partikelschaummaterial (13) relativ zu dem thermischen Strahler (6) bewegt wird, **dadurch gekennzeichnet, dass** das Partikelschaummaterial (13, 14) vor, während und/oder nach der Bestrahlung durch zumindest eine Sensoreinrichtung (15) erfasst wird und dass zumindest eine Eigenschaft des entstehenden geschäumten Partikelschaummaterials (14) durch Regelung von zumindest einem Bestrahlungsparameter eingestellt wird und dass die Regelung von zumindest einem Bestrahlungsparameter in Abhängigkeit von Sensordaten der zumindest einen Sensoreinrichtung (15) und/oder von zumindest einem aus den Sensordaten abgeleiteten Parameter erfolgt.

2. Verfahren nach Anspruch 1, **dadurch gekennzeichnet, dass** aus den Sensordaten zumindest eine Eigenschaft des erfassten Partikelschaummaterials (13, 14) ermittelt wird.

3. Verfahren nach Anspruch 1 oder 2, **dadurch gekennzeichnet, dass** zur Regelung des zumindest einen Bestrahlungsparameters zumindest eine Eigenschaft des noch nicht bestrahlten Partikelschaummaterials (13) mit den Sensordaten oder mit zumindest einer, aus den Sensordaten ermittelten Eigenschaft des bestrahlten Partikelschaummaterials (14) in Beziehung gesetzt wird.

4. Verfahren nach einem der Ansprüche 1 bis 3, **dadurch gekennzeichnet, dass** die Sensoreinrichtung (15) das Partikelschaummaterial (13, 14) während der Relativbewegung zwischen Partikelschaummaterial (13, 14) und thermischem Strahler (6) erfasst.

5. Verfahren nach einem der Ansprüche 1 bis 3, **dadurch gekennzeichnet, dass** von dem bewegten Partikelschaummaterial (14) eine Probe entnommen wird, und die Sensoreinrichtung (15) die entnommene Probe erfasst.

6. Verfahren nach einem der Ansprüche 1 bis 5, **dadurch gekennzeichnet, dass** die Sensoreinrichtung (15) eine bildgebende Sensoreinrichtung ist.

7. Verfahren nach einem der Ansprüche 1 bis 6, **dadurch gekennzeichnet, dass** die Vorrichtung (1) einen Behälter (20) umfasst und dass zumindest ein Teil des geschäumten Partikelschaummaterials (14) in den Behälter (20) gefördert und in dem Behälter (20) vorübergehend gesammelt wird und dass zumindest ein Teil des im Behälter (20) gesammelten Partikelschaummaterials (14) durch die Sensoreinrichtung (15) erfasst wird.

8. Verfahren nach Anspruch 7, **dadurch gekennzeichnet, dass** die Sensoreinrichtung (15) eine Einrichtung zur Erfassung des Füllstandes des Behälters (20) ist, wobei unter Zuhilfenahme des erfassten Füllstandes des Behälters (20) zumindest eine Eigenschaft des geschäumten Partikelschaummaterials (14) ermittelt wird.

9. Verfahren nach Anspruch 7 oder 8, **dadurch gekennzeichnet, dass** der Behälter (20) einen Einlass (21) und einen verschließbaren Auslass (22) aufweist und dass zumindest ein Teil des geschäumten Partikelschaummaterials (14) über den Einlass (21) in den Behälter (20) gefördert und durch Schließen des Auslasses (22) in dem Behälter (20) vorübergehend gesammelt wird, bevor es den Behälter (20) über den Auslass (22) verlässt.

10. Verfahren nach einem der Ansprüche 7 bis 9, **dadurch gekennzeichnet, dass** - nach einer vorgegebenen Zeitspanne der Füllstand des geschäumten Partikelschaummaterials (14) im Behälter (20) erfasst wird.

11. Verfahren nach einem der Ansprüche 8 bis 10, **dadurch gekennzeichnet, dass** die Schüttdichte des geschäumten Partikelschaummaterials (14) anhand eines Algorithmus ermittelt wird, der als Eingangsgrößen den nach einer vorgegebenen Zeitspanne erfassten Füllstand des geschäumten Partikelschaummaterials (14) im Behälter (20) und den Massestrom des Partikelschaummaterials (13) relativ zu dem thermischen Strahler (6) verwendet.

12. Verfahren nach einem der Ansprüche 7 bis 11, **dadurch gekennzeichnet, dass** zumindest ein Teil des durch den thermischen Strahler (6) geschäumten Partikelschaummaterials (14) durch den Behälter (20) gefördert wird.

13. Verfahren nach einem der vorhergehenden Ansprüche, **dadurch gekennzeichnet, dass** die Regelung des zumindest einen Bestrahlungsparameters ohne Unterbrechung der Bestrahlung des Partikelschaummaterials (13) und/oder ohne Unterbrechung der Relativbewegung zwischen Partikelschaummaterial (13) und thermischem Strahler (6) erfolgt.

14. Verfahren nach einem der vorhergehenden Ansprüche, **dadurch gekennzeichnet, dass** in einer das Verfahren steuernden Steuereinrichtung (16) verschiedenen Eigenschaften des geschäumten Partikelschaummaterials (14) jeweils unterschiedliche Bestrahlungsparameter oder ein unterschiedlicher Satz von Bestrahlungsparametern zugeordnet sind.

15. Verfahren zur Herstellung eines geschäumten Partikelschaummaterials (14) in Form eines Granulats, bei dem expansionsfähiges Partikelschaummaterial (13) in Form eines Granulats mittels eines thermischen Strahlers (6) bestrahlt wird, wobei das Partikelschaummaterial (13) relativ zu dem thermischen Strahler (6) bewegt wird, **dadurch gekennzeichnet, dass** das Partikelschaummaterial (13, 14) vor, während und/oder nach der Bestrahlung durch zumindest eine Sensoreinrichtung (15) erfasst wird und dass zumindest eine Eigenschaft des entstehenden geschäumten Partikelschaummaterials (14) durch Regelung von zumindest einem Bestrahlungsparameter eingestellt wird und dass der zumindest eine Bestrahlungsparameter das Spektrum der IR-Strahlung ist.

16. Verfahren nach einem der vorhergehenden Ansprüche, **dadurch gekennzeichnet, dass** die Regelung des zumindest einen Bestrahlungsparameters durch Regelung der Strahlungsleistung und/oder des Spektrums des thermischen Strahlers (6) und/oder durch Regelung der Relativgeschwindigkeit zwischen Partikelschaummaterial (13) und thermischem Strahler (6) und/oder durch Variation eines Abstandes zwischen dem thermischen Strahler (6) und dem Partikelschaummaterial (13) und/oder durch Einstellung der Schüttdichte des sich relativ zu dem thermischen Strahler (6) bewegenden Partikelschaummaterials (13) angepasst wird.

17. Verfahren nach einem der vorhergehenden Ansprüche, **dadurch gekennzeichnet, dass** das Partikelschaummaterial (13) mittels einer Fördervorrichtung (2) durch den Strahlungsbereich des thermischen Strahlers (6) bewegt wird, wobei die Fördervorrichtung (2) durch oder entlang einer Wärmekammer (5), in der der thermische Strahler (6) angeordnet ist, verläuft.

18. Verfahren nach einem der vorhergehenden Ansprüche, **dadurch gekennzeichnet, dass** die Temperatur des thermischen Strahlers (6) derart gewählt wird, dass dieser eine elektromagnetische Strahlung mit einer Wellenlänge im Bereich von 0,8µm bis 8,0µm, vorzugsweise von 2,5µm bis 3,5µm, abgibt.

19. Verfahren nach einem der vorhergehenden Ansprüche, **dadurch gekennzeichnet, dass** das expansionsfähige Partikelschaummaterial (13) ein Treibmittel enthält.

20. Verfahren nach einem der vorhergehenden Ansprüche, **dadurch gekennzeichnet, dass** das Partikelschaummaterial (13) in einer Lage (10) relativ zu dem thermischen Strahler (6) bewegt wird, wobei die je Zeiteinheit in die Lage (10) eingebrachte thermische Energie derart gewählt ist, dass sich über die gesamte Dicke der Lage (10) eine gleichmäßige Zellgröße der Zellstruktur im geschäumten Partikelschaummaterial (14) bildet.

21. Verfahren nach einem der vorhergehenden Ansprüche, **dadurch gekennzeichnet, dass** das Partikelschaummaterial nach der Bestrahlung abgekühlt wird.

22. Verfahren nach einem der vorhergehenden Ansprüche, **dadurch gekennzeichnet, dass** die in das Partikelschaummaterial (13) eingebrachte thermische Energie derart gewählt ist, dass die Schmelztemperatur des Partikelschaummaterials (13) nicht überschritten wird.

23. Verfahren nach einem der vorhergehenden Ansprüche, **dadurch gekennzeichnet, dass** der thermische Strahler (6) segmentiert ausgebildet ist, und die einzelnen Segmente eine unterschiedliche Energiestromdichte abgeben.

24. Verfahren nach einem der vorhergehenden Ansprüche, **dadurch gekennzeichnet, dass** das Volumen des Partikelschaummaterials (13) durch die Bestrahlung um zumindest 30% vergrößert wird.

25. Verfahren nach einem der vorhergehenden Ansprüche, **dadurch gekennzeichnet, dass** im Partikelschaummaterial (13) ein Füllstoff enthalten ist, durch den ein gleichmäßiges Zellwachstum hervorgerufen wird und/oder von dem Strahlung im Wellenlängenbereich des thermischen Strahlers (6) absorbiert wird.

26. Vorrichtung (1) zur Herstellung eines geschäumten Partikelschaummaterials (14) in Form eines Granulats, umfassend einen thermischen Strahler (6) zur Bestrahlung von expansionsfähigem Partikelschaummaterial (13) und eine Fördervorrichtung (2) zum Fördern des Partikelschaummaterials (13) durch den Strahlungsbereich des thermischen Strahlers (6), wobei die Vorrichtung (1) eine Steuereinrichtung (16) aufweist, **dadurch gekennzeichnet, dass** die Steuereinrichtung (16) zur Einstellung zumindest einer Eigenschaft des geschäumten Partikelschaummaterials (14) eine Regelung zumindest eines Bestrahlungsparameters umfasst, und dass die Vorrichtung (1) zumindest eine mit der Steuereinrichtung (16) verbundene Sensoreinrichtung (15) zur Erfassung des Partikelschaummaterials (13, 14) umfasst.

27. Vorrichtung nach Anspruch 26, **dadurch gekennzeichnet, dass** die Fördervorrichtung (2) durch den Erfassungsbereich der zumindest einen Sensoreinrichtung (15) verläuft.

28. Vorrichtung nach einem der Ansprüche 26 bis 27, **dadurch gekennzeichnet, dass** die Fördervorrichtung (2) durch oder entlang einer Wärmekammer (5), in der der thermische Strahler (6) angeordnet ist, verläuft.

29. Vorrichtung nach einem der Ansprüche 26 bis 28, **dadurch gekennzeichnet, dass** die Vorrichtung (1) einen Behälter (20) zum vorübergehenden Sammeln von geschäumtem Partikelschaummaterial (14) umfasst, wobei sich zumindest ein Teil des Behälters im Erfassungsbereich der Sensoreinrichtung (15) befindet, wobei die Sensoreinrichtung (15) eine Einrichtung zur Erfassung des Füllstandes des Behälters (20) ist.

30. Vorrichtung nach Anspruch 29, **dadurch gekennzeichnet, dass** der Behälter (20) einen Einlass (21) und einen verschließbaren Auslass (22) aufweist, wobei die Vorrichtung (1) einen mit der Steuereinrichtung (16) verbundenen Aktuator zum Verschließen des Auslasses (22) aufweist.

31. Vorrichtung nach Anspruch 29 oder 30, **dadurch gekennzeichnet, dass** der Behälter (20) einen von oben nach unten kleiner werdenden Querschnitt aufweist.

32. Vorrichtung nach einem der Ansprüche 29 bis 31, **dadurch gekennzeichnet, dass** der Behälter (20) in jenem Endbereich der Fördereinrichtung (2), der sich stromabwärts des thermischen Strahlers (6) befindet, angeordnet ist.

33. Geschäumtes Partikelschaummaterial (14) in Form eines Granulats, hergestellt in einem Verfahren nach einem der Ansprüche 1 bis 25, aus einem expansionsfähigem Partikelschaummaterial (13) aus Polystyrol, wobei im Querschnitt durch die Partikel des geschäumten Partikelschaummaterials **(14)** die Zellstruktur des Schaummaterials weitestgehend regelmäßig ausgebildet ist und dass eine Abmessung einer Mehrzahl der Zellen der Zellstruktur kleiner als 100µm ist.

34. Geschäumtes Partikelschaummaterial nach Anspruch 33, **dadurch gekennzeichnet, dass** die Wärmeleitfähigkeit des Partikelschaummaterials (14) kleiner als 30 mW/(mK) ist.

## Claims

1. A method for producing a foamed particle foam material (14) in the form of a granulate material, in which expandable particle foam material (13) in the form of a granulate material is radiated by means of a thermal radiator (6), wherein the particle foam material (13) is moved relative to the thermal radiator (6), **characterized in that** the particle foam material (13, 14) is detected by at least one sensor device (15) before, during and/or after the radiation, and that at least one property of the resulting foamed particle foam material (14) is adjusted by regulating at least one radiation parameter and that regulating at least one radiation parameter is performed depending on sensor data of the at least one sensor device (15) and/or on at least one parameter derived from the sensor data.

2. The method according to claim 1, **characterized in that** at least one property of the detected particle foam material (13, 14) is determined from the sensor data.

3. The method according to claim 1 or 2, **characterized in that** for regulating the at least one radiation parameter, at least one property of the not yet radiated particle foam material (13) is brought into relation to the sensor data or to at least one property of the radiated particle foam material (14) determined from the sensor data.

4. The method according to one of claims 1 to 3, **characterized in that** the sensor device (15) detects the particle foam material (13, 14) during the relative movement between the particle foam material (13, 14) and the thermal radiator (6).

5. The method according to one of claims 1 to 3, **characterized in that** a sample is taken from the moving particle foam material (14), and the sensor device (15) detects the taken sample.

6. The method according to one of claims 1 to 5, **characterized in that** the sensor device (15) is an imaging sensor device.

7. The method according to one of claims 1 to 6, **characterized in that** the device (1) comprises a container (20) and that at least a part of the foamed particle foam material (14) is conveyed into the container (20) and temporarily collected in the container (20) and that at least a part of the particle foam material (14) collected in the container (20) is detected by the sensor device (15).

8. The method according to claim 7, **characterized in that** the sensor device (15) is a device for detecting the fill level of the container (20), wherein at least one property of the foamed particle foam material (14) is determined with the aid of the detected fill level of the container (20).

9. The method according to claim 7 or 8, **characterized in that** the container (20) comprises an inlet (21) and a closable outlet (22) and that at least a part of the foamed particle foam material (14) is conveyed into the container (20) via the inlet (21) and temporarily collected in the container (20) by closing the outlet (22) before leaving the container (20) via the outlet (22).

10. The method according to one of claims 7 to 9, **characterized in that** - after a predefined period of time - the fill level of the foamed particle foam material (14) in the container (20) is detected.

11. The method according to one of claims 8 to 10, **characterized in that** the bulk density of the foamed particle foam material (14) is determined using an algorithm which uses the fill level of the foamed particle foam material (14) in the container (20) detected after a predetermined period of time and the mass flow of the particle foam material (13) relative to the thermal radiator (6) as input parameters.

12. The method according to one of claims 7 to 11, **characterized in that** at least a part of the particle foam material (14) foamed by the thermal radiator (6) is conveyed through the container (20).

13. The method according to one of the preceding claims, **characterized in that** regulating the at least one radiation parameter is carried out without interrupting the radiation of the particle foam material (13) and/or without interrupting the relative movement between the particle foam material (13) and the thermal radiator (6).

14. The method according to one of the preceding claims, **characterized in that**, in a control device (16) controlling the method, different radiation parameters or a different set of radiation parameters are in each case assigned to different properties of the foamed particle foam material (14).

15. The method for producing a foamed particle foam material (14) in the form of a granulate material, in which expandable particle foam material (13) in the form of a granulate material is radiated by means of a thermal radiator (6), wherein the particle foam material (13) is moved relative to the thermal radiator (6), **characterized in that** the particle foam material (13, 14) is detected by at least one sensor device (15) before, during and/or after the radiation, and that at least one property of the resulting foamed particle foam material (14) is adjusted by regulating at least one radiation parameter and that the at least one radiation parameter is the spectrum of the IR radiation.

16. The method according to one of the preceding claims, **characterized in that** regulating the at least one radiation parameter is adjusted by regulating the radiation power and/or the spectrum of the thermal radiator (6) and/or by regulating the relative velocity between the particle foam material (13) and the thermal radiator (6) and/or by varying a distance between the thermal radiator (6) and the particle foam material (13) and/or by adjusting the bulk density of the particle foam material (13) moving relative to the thermal radiator (6).

17. The method according to one of the preceding claims, **characterized in that** the particle foam material (13) is moved through the radiation region of the thermal radiator (6) by means of a conveying device (2), wherein the conveying device (2) extends through or along a heat chamber (5) in which the thermal radiator (6) is arranged.

18. The method according to one of the preceding claims, **characterized in that** the temperature of the thermal radiator (6) is selected such that it emits an electromagnetic radiation with a wavelength in the range of 0.8 µm to 8.0 µm, preferably of 2.5 µm to 3.5 µm.

19. The method according to one of the preceding claims, **characterized in that** the expandable particle foam material (13) contains a blowing agent.

20. The method according to one of the preceding claims, **characterized in that** the particle foam material (13) is moved relative to the thermal radiator (6) in a layer (10), wherein the thermal energy introduced into the layer (10) per time unit is selected such that a uniform cell size of the cell structure is formed in the foamed particle foam material (14) over the entire thickness of the layer (10).

21. The method according to one of the preceding claims, **characterized in that** the particle foam material is cooled after the radiation.

22. The method according to one of the preceding claims, **characterized in that** the thermal energy introduced into the particle foam material (13) is selected such that the melting temperature of the particle foam material (13) is not exceeded.

23. The method according to one of the preceding claims, **characterized in that** the thermal radiator (6) is embodied being segmented, and the individual segments emit different energy current densities.

24. The method according to one of the preceding claims, **characterized in that** the volume of the particle foam material (13) is enlarged by at least 30% by the radiation.

25. The method according to one of the preceding claims, **characterized in that** a filling material, by which a uniform cell growth is induced and/or by which radiation in the wavelength range of the thermal radiator (6) is absorbed, is contained in the particle foam material (13).

26. A device (1) for producing a foamed particle foam material (14) in the form of a granulate material, comprising a thermal radiator (6) for radiating expandable particle foam material (13) and a conveying device (2) for conveying the particle foam material (13) through the radiation region of the thermal radiator (6), wherein the device (1) comprises a control device (16), **characterized in that**, for adjusting at least one property of the foamed particle foam material (14) the control device (16) comprises regulating at least one radiation parameter, and that the device (1) comprises at least one sensor device (15), which is connected to the control device (16), for detecting the particle foam material (13, 14).

27. The device according to claim 26, **characterized in that** the conveying device (2) extends through the detection range of the at least one sensor device (15).

28. The device according to one of claims 26 to 27, **characterized in that** the conveying device (2) extends through or along a heat chamber (5) in which the thermal radiator (6) is arranged.

29. The device according to one of claims 26 to 28, **characterized in that** the device (1) comprises a container (20) for temporarily collecting foamed particle foam material (14), wherein at least a part of the container is located in the detection range of the sensor device (15), wherein the sensor device (15) is a device for detecting the fill level of the container (20).

30. The device according to claim 29, **characterized in that** the container (20) comprises an inlet (21) and a closable outlet (22), wherein the device (1) comprises an actuator, which is connected to the control device (16), for closing the outlet (22).

31. The device according to claim 29 or 30, **characterized in that** the container (20) has a cross-section which decreases from top to bottom.

32. The device according to one of claims 29 to 31, **characterized in that** the container (20) is arranged **in that** end region of the conveying device (2) which is located downstream of the thermal radiator (6).

33. A foamed particle foam material (14) in the form of a granulate material, produced in a method according to one of claims 1 to 25, from an expandable particle foam material (13) made of polystyrene, wherein in cross-section through the particles of the foamed particle foam material (14), the cell structure of the foam material is formed to be substantially regular and that a dimension of a plurality of the cells of the cell structure is smaller than 100 µm.

34. The foamed particle foam material according to claim 33, **characterized in that** the thermal conductivity of the particle foam material (14) is smaller than 30 mW/(mK).

## Revendications

1. Procédé de fabrication d'une matière de mousse particulaire expansée (14) sous la forme de granulés, dans lequel la matière de mousse particulaire expansible (13) sous la forme de granulés est irradiée au moyen d'un radiateur thermique (6), dans lequel la matière de mousse particulaire (13) est déplacée par rapport au radiateur thermique (6), **caractérisé en ce que** la matière de mousse particulaire (13, 14) est mesurée avant, pendant et/ou après l'irradiation par au moins un dispositif de capteur (15) et **en ce qu'**au moins une propriété de la matière de mousse particulaire expansée (14) résultante est ajustée par la régulation d'au moins un paramètre d'irradiation et **en ce que** la régulation d'au moins un paramètre d'irradiation est effectuée en fonction de données de capteur de l'au moins un dispositif de capteur (15) et/ou d'au moins un paramètre dérivé des données de capteur.

2. Procédé selon la revendication 1, **caractérisé en ce qu'**au moins une propriété de la matière de mousse particulaire (13, 14) mesurée est déterminée à partir des données de capteur.

3. Procédé selon la revendication 1 ou 2, **caractérisé en ce que**, pour la régulation de l'au moins un paramètre d'irradiation, au moins une propriété de la matière de mousse particulaire (13) non encore irradiée est mise en relation avec les données de capteur ou avec au moins une propriété, déterminée à partir des données de capteur, de la matière de mousse particulaire (14) irradiée.

4. Procédé selon l'une des revendications 1 à 3, **caractérisé en ce que** le dispositif de capteur (15) mesure la matière de mousse particulaire (13, 14) pendant le mouvement relatif entre la matière de mousse particulaire (13, 14) et le radiateur thermique (6).

5. Procédé selon l'une des revendications 1 à 3, **caractérisé en ce que**, de la matière de mousse particulaire (14) déplacée, un échantillon est prélevé, et le dispositif de capteur (15) mesure l'échantillon prélevé.

6. Dispositif selon l'une des revendications 1 à 5, **caractérisé en ce que** le dispositif de capteur (15) est un dispositif de capteur graphique.

7. Procédé selon l'une des revendications 1 à 6, **caractérisé en ce que** le dispositif (1) comprend un récipient (20) et **en ce qu'**au moins une partie de la matière de mousse particulaire (14) expansée est transportée vers le récipient (20) et est collectée provisoirement dans le récipient (20) et **en ce qu'**au moins une partie de la matière de mousse particulaire (14) collectée dans le récipient (20) est mesurée par le dispositif de capteur (15).

8. Procédé selon la revendication 7, **caractérisé en ce que** le dispositif de capteur (15) est un dispositif pour la mesure du niveau de remplissage du récipient (20), dans lequel, à l'aide du niveau de remplissage mesuré du récipient (20), au moins une propriété de la matière de mousse particulaire (14) est déterminée.

9. Procédé selon la revendication 7 ou 8, **caractérisé en ce que** le récipient (20) comprend une entrée (21) et une sortie (22) refermable et **en ce qu'**au moins une partie de la matière de mousse particulaire (14) est transportée à travers l'entrée (21) vers le récipient (20) et et la fermeture de la sortie (22) permet de la collecter provisoirement avant qu'elle ne quitte le récipient (20) à travers la sortie (22).

10. Procédé selon l'une des revendications 7 à 9, **caractérisé en ce que**, après un laps de temps prédéterminé, le niveau de remplissage de la matière de mousse particulaire expansée (14) dans le récipient (20) est mesuré.

11. Procédé selon l'une des revendications 8 à 10, **caractérisé en ce que** la masse vol-lumique apparente de la matière de mousse particulaire expansée (14) est déterminée à l'aide d'un algorithme qui utilise, en tant que grandeurs d'entrée, le niveau de remplissage mesuré après un laps de temps prédéterminé de la matière de mousse particulaire expansée (14) dans le récipient (20) et le débit massique de la matière de mousse particulaire (13) par rapport au radiateur thermique (6).

12. Procédé selon l'une des revendications 7 à 11, **caractérisé en ce qu'**au moins une partie de la matériau en mousse particulaire expansée (14) par le radiateur thermique (6) est transportée à travers le récipient (20).

13. Procédé selon l'une des revendications précédentes, **caractérisé en ce que** la régulation de l'au moins un paramètre d'irradiation a lieu sans interruption de l'irradiation de la matière de mousse particulaire (13) et/ou sans interruption du mouvement relatif entre la matière de mousse particulaire (13) et le radiateur thermique (6).

14. Procédé selon l'une des revendications précédentes, **caractérisé en ce que**, dans un dispositif de commande (16) contrôlant le procédé, à différentes propriétés de la matière de mousse particulaire expansée (14) correspondent respectivement différents paramètres d'irradiation ou un ensemble différent de paramètres d'irradiation.

15. Procédé de fabrication d'une matière de mousse particulaire expansée (14) sous la forme de granulés, dans lequel la matière de mousse particulaire expansible (13) sous la forme de granulés est irradiée au moyen d'un radiateur thermique (6), dans lequel la matière de mousse particulaire (13) est déplacée par rapport au radiateur thermique (6), **caractérisé en ce que** la matière de mousse particulaire (13, 14) est mesurée avant, pendant et/ou après l'irradiation par au moins un dispositif de capteur (15) et **en ce qu'**au moins une propriété de la matière de mousse particulaire expansée (14) résultante est ajustée par régulation d'au moins un paramètre d'irradiation et **en ce que** le au moins un paramètre d'irradiation est le spectre du rayonnement IR.

16. Procédé selon l'une des revendications précédentes, **caractérisé en ce que** la régulation de l'au moins un paramètre d'irradiation est adaptée par la régulation de la puissance du rayonnement et/ou du spectre du radiateur thermique (6) et/ou par la régulation de la vitesse relative entre la matière de mousse particulaire (13) et le radiateur thermique (6) et/ou par la variation d'une distance entre le radiateur thermique (6) et la matière de mousse particulaire (13) et/ou par le réglage de la masse volumique apparente de la matière de mousse particulaire (13) se déplaçant par rapport au radiateur thermique (6).

17. Procédé selon l'une des revendications précédentes, **caractérisé en ce que** la matière de mousse particulaire (13) est déplacée au moyen d'un dispositif de transport (2) à travers la zone de rayonnement du radiateur thermique (6), dans lequel le dispositif de transport (2) s'étend à travers ou le long d'une chambre thermique (5) dans laquelle se trouve le radiateur thermique (6).

18. Procédé selon l'une des revendications précédentes, **caractérisé en ce que** la température du radiateur thermique (6) est choisie de façon à ce que celui-ci émette un rayonnement électromagnétique avec une longueur d'onde de l'ordre de 0,8 µm à 8,0 µm, de préférence de 2,5 µm à 3,5 µm.

19. Dispositif selon l'une des revendications précédentes, **caractérisé en ce que** la matière de mousse particulaire (13) expansible contient un agent gonflant.

20. Procédé selon l'une des revendications précédentes, **caractérisé en ce que** la matière de mousse particulaire (13) est déplacée dans une couche (10) par rapport au radiateur thermique (6), dans lequel l'énergie thermique apportée par unité de temps à la couche (10) est choisie de façon à ce que, sur toute l'épaisseur de la couche (10), se forme une taille d'alvéole uniforme de la structure alvéolaire dans la matière de mousse particulaire expansée (14).

21. Procédé selon l'une des revendications précédentes, **caractérisé en ce que** la matière de mousse particulaire est refroidie après l'irradiation.

22. Procédé selon l'une des revendications précédentes, **caractérisé en ce que** l'énergie thermique apportée à la matière de mousse particulaire (13) est choisie de façon à ce que la température de fusion de la matière de mousse particulaire (13) ne soit pas dépassée.

23. Procédé selon l'une des revendications précédentes, **caractérisé en ce que** le radiateur thermique (6) est conçu de manière segmentée, et les différents segments émettent une densité d'énergie différente.

24. Procédé selon l'une des revendications précédentes, **caractérisé en ce que** le volume de la matière de mousse particulaire (13) est augmenté par l'irradiation d'au moins 30 %.

25. Procédé selon l'une des revendications précédentes, **caractérisé en ce que**, dans la matière de mousse particulaire (13), est contenue une matière de remplissage qui produit une croissance uniforme des alvéoles et/ou qui est absorbée par l'irradiation dans le domaine de longueurs d'ondes du radiateur thermique (6).

26. Dispositif (1) pour la fabrication d'une matière de mousse particulaire expansée (14) sous forme de granulés, comprenant un radiateur thermique (6) pour l'irradiation d'une matière de mousse particulaire (13) expansible et un dispositif de transport (2) pour le transport de la matière de mousse particulaire (13) à travers la zone de rayonnement du radiateur thermique (6), dans lequel le dispositif (1) comprend un dispositif de commande (16), **caractérisé en ce que** le dispositif de commande (16) comprend, pour le réglage d'au moins une propriété de la matière de mousse particulaire expansée (14), une régulation d'au moins un paramètre d'irradiation et **en ce que** le dispositif (1) comprend au moins un dispositif de capteur (15), relié au dispositif de commande (16), pour la mesure de la matière de mousse particulaire (13, 14).

27. Dispositif selon la revendication 26, **caractérisé en ce que** le dispositif de transport (2) s'étend à travers la zone de mesure de l'au moins un dispositif de capteur (15).

28. Dispositif selon l'une des revendications 26 à 27, **caractérisé en ce que** le dispositif de transport (2) s'étend à travers ou le long d'une chambre thermique (5) dans laquelle se trouve le radiateur thermique (6).

29. Dispositif selon l'une des revendications 26 à 28, **caractérisé en ce que** le dispositif (1) comprend un récipient (20) pour la collecte provisoire de la matière de mousse particulaire expansée (14), dans lequel au moins une partie du récipient se trouve dans la zone de mesure du dispositif de capteur (15), dans lequel le dispositif de capteur (15) est un dispositif pour la mesure du niveau de remplissage du récipient (20).

30. Dispositif selon la revendication 29, **caractérisé en ce que** le récipient (20) présente une entrée (21) et une sortie fermable (22), dans lequel le dispositif (1) comprend un actionneur, relié avec le dispositif de commande (16), pour la fermeture de la sortie (22).

31. Dispositif selon la revendication 29 ou 30, **caractérisé en ce que** le récipient (20) présente une section transversale se rétrécissant du haut vers le bas.

32. Dispositif selon l'une des revendications 29 à 31, **caractérisé en ce que** le récipient (20) est disposé dans la partie d'extrémité du dispositif de transport (2) qui se trouve en aval du radiateur thermique (6).

33. Matière de mousse particulaire expansée (14) sous la forme de granulés, fabriquée à l'aide d'un procédé selon l'une des revendications 1 à 25, à partir d'une matière de mousse particulaire expansible (13) constituée de polystyrène, dans laquelle, dans la section à travers les particules de la matière de mousse particulaire expansée (14), la structure alvéolaire de la matière de mousse est largement régulière et en ce qu'une dimension d'une pluralité d'alvéoles de la structure alvéolaire est inférieure à 100 µm.

34. Matière de mousse particulaire expansée selon la revendication 33, **caractérisé en ce que** la conductivité thermique de la matière de mousse particulaire (14) est inférieure à 30 mW/(mK).
